# EUROPEAN PATENT APPLICATION

(11) **EP 4 845 255 A1**
(43) Date of publication of application: **25.11.2026**
(21) Application number: 24917792.4
(22) Date of filing: 19.01.2024
(51) Int. Cl.: H04W 72/04, H04L 5/00

(54) **COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Wendong, Dongguan, Guangdong 523860 (CN); LIU, Zhe, Dongguan, Guangdong 523860 (CN); CHEN, Wenhong, Dongguan, Guangdong 523860 (CN)
(74) Representative: Mewburn Ellis LLP
(86) International application number: PCT/CN2024/073323
(87) International publication number: WO 2025/152169

(57) **Abstract**

The present disclosure relates to a communication method, a terminal device, and a network device, and the communication method includes the following. The terminal device receives a first signal, the first signal including a downlink reference signal and/or a downlink channel transmitted by at least two network nodes on identical time-frequency resources. The terminal device obtains the downlink reference signal and/or the downlink channel from the first signal using one or more of the following information: time-frequency location information of the downlink reference signal and/or the downlink channel; power information of the downlink reference signal and/or the downlink channel; or transmit spatial filter information of the downlink reference signal and/or the downlink channel. The present disclosure is capable of supporting multiple network nodes transmitting a signal and/or a channel on the same time-frequency resources.

## Description

### TECHNICAL FIELD

This disclosure relates to the field of communications, and more particularly, to a communication method, a terminal device, and a network device.

### BACKGROUND

In multiple transmission reception point (MTRP) technology, a user equipment (UE) can communicate with two or more TRPs. In a scenario where multiple network nodes transmit signals to a UE on the same time-frequency resources, how a terminal device separates a downlink reference signal and/or a downlink channel from the received signals is a technical problem to be solved.

### SUMMARY

Embodiments of the present disclosure provide a communication method, a terminal device, and a network device that can support multiple network nodes to transmit signals and/or channels on the same time-frequency resources.

A communication method is provided in embodiments of the present disclosure. A terminal device receives a first signal, where the first signal includes a downlink reference signal and/or a downlink channel transmitted by at least two network nodes on identical time-frequency resources. The terminal device obtains the downlink reference signal and/or the downlink channel from the first signal using one or more of the following information: time-frequency location information of the downlink reference signal and/or the downlink channel; power information of the downlink reference signal and/or the downlink channel; or transmit spatial filter information of the downlink reference signal and/or the downlink channel.

A communication method is provided in embodiments of the present disclosure. A network device sends to a terminal device one or more of the following information, the one or more of the following information being used by the terminal device to obtain a downlink reference signal and/or a downlink channel from a first signal, the first signal including the downlink reference signal and/or the downlink channel transmitted by at least two network nodes on identical time-frequency resources: time-frequency location information of the downlink reference signal and/or the downlink channel; power information of the downlink reference signal and/or the downlink channel; or transmit spatial filter information of the downlink reference signal and/or the downlink channel.

A model training method is provided in embodiments of the present disclosure. A neural network model is trained using multiple training samples and labels corresponding to the multiple training samples. A training sample includes a first signal, and the first signal includes a downlink reference signal and/or a downlink channel transmitted by at least two network nodes on identical time-frequency resources. The training sample further includes at least one of: time-frequency location information of the downlink reference signal and/or the downlink channel; power information of the downlink reference signal and/or the downlink channel; or transmit spatial filter information of the downlink reference signal and/or the downlink channel.

A terminal device is provided in embodiments of the present disclosure. The terminal device included a first transceiver module and a first processing module. The first transceiver module is configured to receive a first signal, the first signal including a downlink reference signal and/or a downlink channel transmitted by at least two network nodes on identical time-frequency resources. The first processing module is configured to obtain the downlink reference signal and/or the downlink channel from the first signal using one or more of the following information: time-frequency location information of the downlink reference signal and/or the downlink channel; power information of the downlink reference signal and/or the downlink channel; or transmit spatial filter information of the downlink reference signal and/or the downlink channel.

A network device is further provided in embodiments of the present disclosure. The network device includes a second transceiver module and a second processing module. The second transceiver module is configured to send to a terminal device one or more of the following information, the one or more of the following information being used by the terminal device to obtain a downlink reference signal and/or a downlink channel from a first signal, the first signal including the downlink reference signal and/or the downlink channel transmitted by at least two network nodes on identical time-frequency resources: time-frequency location information of the downlink reference signal and/or the downlink channel; power information of the downlink reference signal and/or the downlink channel; or transmit spatial filter information of the downlink reference signal and/or the downlink channel.

A model training device is further provided in embodiments of the present disclosure. The model training device includes a training module. The training module is configured to train a neural network model using multiple training samples and labels corresponding to the multiple training samples. A training sample includes a first signal, and the first signal includes a downlink reference signal and/or a downlink channel transmitted by at least two network nodes on identical time-frequency resources. The training sample further includes at least one of: time-frequency location information of the downlink reference signal and/or the downlink channel; power information of the downlink reference signal and/or the downlink channel; or transmit spatial filter information of the downlink reference signal and/or the downlink channel.

A terminal device is provided in embodiments of the present disclosure. The terminal device includes a transceiver, a processor, and a memory. The memory is configured to store a computer program, the transceiver is configured to communicate with other devices, and the processor is configured to invoke and execute the computer program stored in the memory, to cause the terminal device to perform the method.

A network device is provided in embodiments of the present disclosure. The network device includes a transceiver, a processor, and a memory. The memory is configured to store a computer program, the transceiver is configured to communicate with other devices, and the processor is configured to invoke and execute the computer program stored in the memory, to cause the network device to perform the method.

A chip is provided in embodiments of the present disclosure, and the chip is configured to perform the above method. Specifically, the chip includes a processor configured to invoke and execute a computer program stored in a memory, to cause a device equipped with the chip to perform the above method.

A computer-readable storage medium is provided in embodiments of the present disclosure. The computer-readable storage medium is configured to store a computer program which, when executed by a device, causes the device to perform the above communication method.

A computer program product is provided in embodiments of the present disclosure. The computer program product includes computer program instructions which cause a computer to perform the above communication method.

A computer program is provided in embodiments of the present disclosure. The computer program, when running on a computer, causing a computer to perform the above communication method.

With the communication method proposed in embodiments of the present disclosure, the terminal device may utilize at least one of time-frequency location information, power information, and transmit spatial filter information of the downlink reference signal and/or the downlink channel to extract the downlink reference signal and/or the downlink channel from signals transmitted by at least two network nodes on the same time-frequency resources, thereby supporting multiple network nodes to transmit signals and/or channels on the same time-frequency resources.

### BRIEF DESCRIPTION OF THE DRAWINGS

FIG. 1 is a schematic diagram of multiple transmission reception point (MTRP) scheduled by single downlink control information (DCI).
FIG. 2 is a schematic diagram of physical downlink shared channel (PDSCH) and demodulation reference signal (DMRS) sharing time-frequency resources in NR.
FIG. 3 is a schematic diagram of a scheme where DMRS and PDSCH are superimposed.
FIG. 4 is a schematic flowchart of a communication method 400 according to an embodiment of the present disclosure.
FIG. 5 is a schematic diagram of a transmission scheme with partial superimposition between channel state information-reference signal (CSI-RS) and synchronization signal and PBCH block (SSB) according to Embodiment 1 of the present disclosure.
FIG. 6 is a schematic diagram of processing a received reference signal by an artificial intelligence (AI)/ machine learning (ML)-based SIP receiver or convolutional neural network (CNN) model according to Embodiment 1 of the present disclosure.
FIG. 7 is a schematic diagram of a transmission scheme with partial superimposition among PDSCH, DMRS, and SSB according to Embodiment 2 of the present disclosure.
FIG. 8 is a schematic diagram of processing multiple received reference signals and/or channels on the same time-frequency resources by an AI/ML-based SIP receiver or CNN model according to Embodiment 2 of the present disclosure.
FIG. 9 is a schematic diagram of a transmission scheme in which DMRS and other downlink reference signals are multiplexed onto one reference signal (RS) layer according to Embodiment 3 of the present disclosure.
FIG. 10 is a schematic diagram of a transmission scheme in which DMRS and PDSCH from different transmission reception points (TRPs) are superimposed onto different RS and data layers according to Embodiment 4 of the present disclosure.
FIG. 11 is a schematic diagram of a transmission scheme in which DMRSs from different TRPs are superimposed onto the same RS layer and PDSCHs from different TRPs are superimposed onto different data layers according to Embodiment 4 of the present disclosure.
FIG. 12 is a schematic diagram of processing signals and/or channels transmitted by at least two network nodes on the same time-frequency resources by an AI/ML-based SIP receiver or CNN model according to Embodiment 4 of the present disclosure.
FIG. 13 is a schematic flowchart of a communication method 1300 according to an embodiment of the present disclosure.
FIG. 14 is a schematic block diagram of a terminal device 1400 according to an embodiment of the present disclosure.
FIG. 15 is a schematic block diagram of a network device 1500 according to an embodiment of the present disclosure.
FIG. 16 is a schematic structural diagram of a communication device 1600 according to an embodiment of the present disclosure.
FIG. 17 is a schematic structural diagram of a chip 1700 according to an embodiment of the present disclosure.
FIG. 18 is a schematic block diagram of a communication system 1800 according to an embodiment of the present disclosure.

### DETAILED DESCRIPTION

Technical solutions in embodiments of the present disclosure will be described below with reference to accompanying drawings in embodiments of the present disclosure.

The technical solutions in embodiments of the present disclosure may be applied to various communication systems, for example: long term evolution (LTE) systems, advanced long term evolution (LTE-A) systems, new radio (NR) systems, evolved systems of NR systems, LTE-based access to unlicensed spectrum (LTE-U) systems, NR-based access to unlicensed spectrum (NR-U) systems, non-terrestrial networks (NTN) systems, universal mobile telecommunication systems (UMTS), wireless local area networks (WLAN), wireless fidelity (WiFi), 5th-generation (5G) systems, or other communication systems.

Generally, conventional communication systems support a limited number of connections and are easy to be implemented. However, with the development of communication technologies, mobile communication systems will support not only conventional communications but also, for example, device-to-device (D2D) communications, machine-to-machine (M2M) communications, machine type communication (MTC), vehicle-to-vehicle (V2V) communications, or vehicle-to-everything (V2X) communications. Embodiments of the present disclosure may also be applied to these communication systems.

In an embodiment, the communication systems in embodiments of the present disclosure may be applied to a carrier aggregation (CA) scenario, a dual connectivity (DC) scenario, or a standalone (SA) networking scenario.

In an embodiment, the communication systems in embodiments of the present disclosure may be applied to unlicensed spectrum, where unlicensed spectrum may also be regarded as shared spectrum; alternatively, the communication systems in embodiments of the present disclosure may be applied to licensed spectrum, where licensed spectrum may also be regarded as non-shared spectrum.

Embodiments of the present disclosure are described with reference to a network device and a terminal device, where the terminal device may also be referred to as a user equipment (UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a station (ST) in WLAN, a cellular phone, a cordless phone, a session initiation protocol (SIP) phone, a wireless local loop (WLL) station, a personal digital assistant (PDA) device, a handheld device with a wireless communication function, a computing device, another processing device connected to a wireless modem, an in-vehicle device, a wearable device, a terminal device in a next-generation communication system such as an NR network, or a terminal device in a future evolved public land mobile network (PLMN).

In embodiments of the disclosure, the terminal device can be deployed on land, which includes indoor or outdoor, handheld, wearable, or in-vehicle. The terminal device can also be deployed on water (such as ships, or the like). The terminal device can also be deployed in the air (such as airplanes, balloons, satellites, or the like).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, or the like.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone

In embodiments of the disclosure, the network device may be a device configured to communicate with a mobile device, and the network device may be an access point (AP) in a WLAN, or may be an evolutional node B (eNB or eNodeB) in LTE, or a relay station or an AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

The network device may include an access-network device and a core-network device, that is, the wireless communication system may further include multiple core-networks capable of communicating with the access-network device. The access-network device may be an evolutional node B (eNB or e-NodeB for short), a macro base station, a micro base station (also known as "small base station"), a pico base station, an AP, a transmission point (TP), or a new generation node B (gNodeB) in an LTE system, an NR system, or an authorized auxiliary access long-term evolution (LAA-LTE) system.

It may be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It may be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association relationship between the two, or may mean a relationship of indicating and being indicated or configuring and being configured, etc.

For better understanding of technical solutions of embodiments of the disclosure, the related art of embodiments of the disclosure will be described below. The related art below, as an optional scheme, can be arbitrarily combined with the technical solutions of embodiments of the disclosure, which shall all belong to the protection scope of embodiments of the disclosure.

### I. Multiple Transmission Reception Point (Multi-TRP) technology in NR

Multi-TRP may also be referred to as multi-TRP transmission, multi-TRP, multiple-TRP transmission, MTRP, MTRP transmission, or the like.

In enhancement of multi-TRP physical downlink shared channel (PDSCH), two major scenarios are considered: one is an enhanced mobile broadband (eMBB) scenario, and the other is an ultra-reliable low latency communication (URLLC) scenario. Multiple multi-TRP transmission modes are formulated for various scenarios, which may be implemented roughly according to two different scheduling modes.

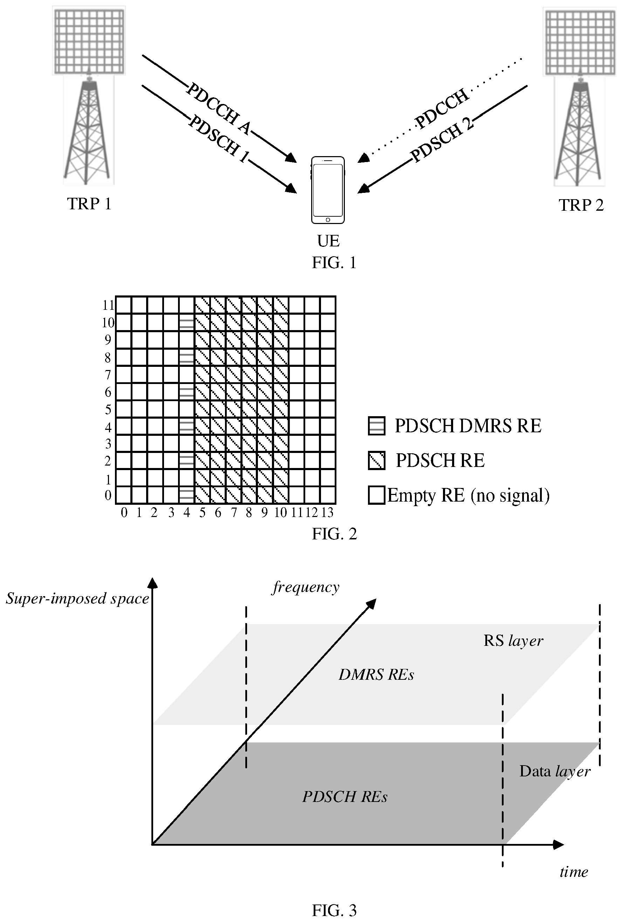

First, single downlink control information (S-DCI) MTRP: in this mode, a network (NW) uses one piece of downlink control information (DCI) to schedule two PDSCH transmissions, where the DCI comes from one of two single transmission reception points (TRPs). The NW may dynamically adjust which TRP is used to send the DCI. The two physical downlink shared channels (PDSCH) are transmitted by the two TRPs in different modes, such as space division multiplexing (SDM), frequency division multiplexing (FDM), time division multiplexing (TDM), and other multiplexing modes. This mode is applicable when there is an ideal backhaul link between the TRPs. In addition, the scheduling DCI may include one or two transmission configuration indication (TCI) states, and the TCI states indicate dynamic switching between single TRP (STRP) transmission and multi-TRP (MTRP) transmission. Specifically, when a code point indicated by a TCI field in the DCI (for example, code point "000") is one TCI state, it indicates single TRP transmission; when the code point (for example, code point "001") indicates two TCI states, it indicates multi-TRP transmission. TCI states activated by a media access control-control element (MAC CE) are classed into a first TCI state and a second TCI state according to a code point in the DCI. Each indicated TCI state is mapped to a specific resource for TRP transmission as the first or second TCI state, such as a code division multiplexing (CDM) group, a demodulation reference signal (DMRS) port, a transmission layer, a phase tracking reference signal (PTRS) port, a redundancy version (RV), and other content related to PDSCH scheduling. FIG. 1 is a schematic diagram of MTRP scheduled by single DCI. This MTRP scheduling mechanism has high flexibility, and the network may select TRP1 or TRP2 to send scheduling information of a physical downlink control channel (PDCCH).

Second, multi-DCI (M-DCI) MTRP: in this mode, each TRP uses DCI to independently schedule transmission to a UE. There is often no (and no need for) an ideal backhaul link between multiple TRPs. Scheduling information of M-DCI is consistent with DCI information of S-TRP, that is, only includes information associated with one transmission TRP, such as indicating only one TCI state ID.

It can be noted that a solution of using a unified TCI state instead of multiple TCI states is supported in related technologies. In embodiments of the present disclosure, the unified TCI state may indicate quasi-co-located (QCL) information.

Neither S-DCI MTRP nor M-DCI MTRP supports a UE in receiving, on the same time-frequency resource, a downlink reference signal and/or a downlink channel from one TRP while receiving a downlink reference signal and/or a channel from another TRP, thus limiting flexibility of scheduling and transmission during MTRP deployment.

### II. Superimposed Pilot (SIP) technology

In related NR technologies, PDSCH and DMRS need to share time-frequency resources. As illustrated in FIG. 2, time-frequency resources are allocated between DMRS resource elements (REs) and PDSCH REs in a TDM manner. When the total time-frequency resources are limited, allocation between DMRS REs and PDSCH REs needs to balance the accuracy of channel estimation and the amount of data that can be carried. For example, if accurate channel estimation is to be achieved, the number of REs allocated to the PDSCH for carrying data will inevitably decrease.

SIP technology may also be referred to as superimposed reference signal technology, including reference signal and channel superimposition, reference signal and reference signal superimposition, channel and channel superimposition, or the like. Time-frequency resources of superimposed one or more reference signals and/or one or more channels may be partially superimposed or fully superimposed, and superimposed reference signals and/or channels may form a superimposed space. FIG. 3 is a schematic diagram of a scheme where DMRS and PDSCH are superimposed. In an example illustrated in FIG. 3, the DMRS and the PDSCH are transmitted on the same time-frequency resources, that is, the PDSCH is transmitted while being superimposed with the DMRS. Similar solutions may also be applicable to the transmission of a PDCCH/physical uplink control channel (PUCCH)/physical uplink shared channel (PUSCH) and the DMRS on the same time-frequency resources. SIP technology has not been discussed in the current technology, so SIP technology may be considered as a technology that has not been fully disclosed. The present disclosure is a further design based thereon (i.e., extended from single transmission reception point (STRP) to MTRP).

A transmission scheme based on superimposed pilots (or superimposed reference signals) relies on an artificial intelligence (AI)/ machine learning (ML) receiver at the receiving end. In embodiments of the present disclosure, a receiver based on a model similar to a convolutional neural network (CNN) may be adopted. The characteristic of this model allows a reference signal (such as the DMRS in embodiments of the present disclosure) and a channel (such as the PDSCH, the PDCCH, etc. in embodiments of the present disclosure) which are superimposed to be separated. A simple explanation is that the AI/ML receiver may perform downlink channel estimation through the separated DMRS, and then demodulate the PDSCH through the estimated channel. The DMRS and the PDSCH may use the same analog beamforming (if any) and/or precoding.

### III. CNN

A CNN model is a type of deep learning model, which is mainly used to process data with a grid-like structure, such as images, audio, and text. Originating from biological research on the visual cortex of animals, it imitates the visual nervous system of animals to process visual tasks.

A CNN model is composed of multiple layers, including a convolutional layer, a pooling layer, a fully connected layer, and the like. The convolutional layer is responsible for extracting local features of an image; the pooling layer is responsible for reducing data dimensionality and lowering computational complexity; the fully connected layer maps features to final outputs for tasks such as classification or regression.

The convolutional layer is the core of a CNN, which extracts local features of input data through convolution operations. A convolution operation generally involves a convolution kernel, also referred to as a filter, which slides over input data and calculates a dot product sum of corresponding regions to form an output feature map. An output of the convolutional layer usually passes through an activation function such as a rectified linear unit (ReLU) to introduce nonlinearity.

The pooling layer is configured to reduce the spatial dimensionality of data, decrease computational complexity, and meanwhile prevent overfitting. Common pooling operations include max pooling and average pooling, which respectively calculate the maximum value and the average value of an input feature map.

The fully connected layer maps extracted features to output tasks such as classification and regression. The number of neurons in the fully connected layer can be adjusted according to actual tasks. The output layer usually adopts an activation function such as Softmax to output probability values.

CNNs are widely applied in the field of computer vision, including image classification, object detection, semantic segmentation, face recognition and other scenarios. CNN models have also been successfully applied in other fields such as natural language processing and speech recognition.

In an NR system, an NW may adopt M-DCI based MTRP technology for downlink coverage. Each TRP performs independent scheduling. Due to the absence of ideal backhaul among multiple TRPs, real-time coordination in reference signal configuration and scheduling is unable to be realized. Therefore, a UE is very likely to receive downlink channels and downlink reference signals from multiple TRPs which are superimposed, partially superimposed, or non-superimposed, which poses challenges to downlink reception of the UE. The downlink reference signals include channel state information-reference signal (CSI-RS), synchronization signal and PBCH block (SSB), and DMRS; and the downlink channels include control channels and data channels, such as PDCCH and PDSCH, and the downlink channels may also be referred to as downlink signals.

When ideal backhaul transmission is available among multiple TRPs of the NW, S-DCI based MTRP operation can be adopted, where one TRP schedules downlink transmissions from multiple TRPs. However, this manner requires UE capability support and the definition of numerous complex rules to determine which channels and signals are transmitted by which multiplexing scheme, such as time division multiplexing, frequency division multiplexing, or space division multiplexing. Such rules greatly increase the implementation complexity of the UE.

For SIP transmission in a multi-TRP scenario, the downlink reference signal and/or the downlink channel transmitted by at least two TRPs to a UE are superimposed to form a superimposed signal. For such a scenario, embodiments of the present disclosure design an AI/ML-based SIP receiver or a CNN model. The SIP receiver or the CNN model can separate downlink reference signals and downlink channels which are superimposed from the received superimposed signal. This requires support of UE capability, and providing sufficient information for the SIP receiver or the CNN model to enable the SIP receiver or the CNN model to separate downlink reference signals and downlink channels from the received signal.

Multi-TRP operation can be implemented in intra-cell and inter-cell scenarios. When multiple TRPs belong to different serving cells, different TRPs are associated with different physical cell identities (PCI). Therefore, it can be noted that the scheme designed in embodiments of the present disclosure are applicable to intra-cell superimposed reference signal transmission and multi-cell superimposed reference signal transmission.

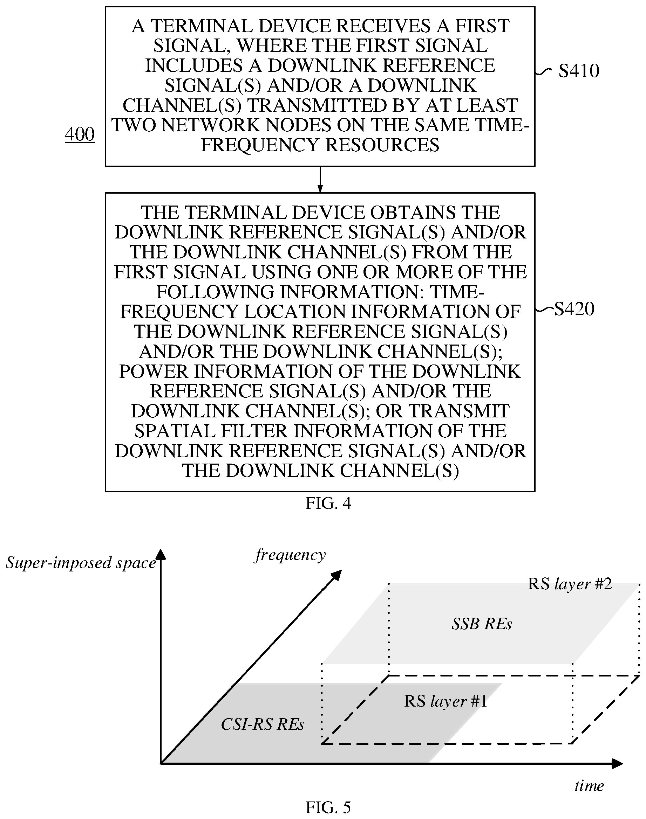

FIG. 4 is a schematic flowchart of a communication method 400 according to an embodiment of the present disclosure. The method optionally may be applied to the system illustrated FIG. 1, but is not limited thereto. The method includes at least some of the following.

S410, a terminal device receives a first signal, where the first signal includes a downlink reference signal(s) and/or a downlink channel(s) transmitted by at least two network nodes on the same time-frequency resources.

S420, the terminal device obtains the downlink reference signal(s) and/or the downlink channel(s) from the first signal using one or more of the following information: time-frequency location information of the downlink reference signal(s) and/or the downlink channel(s); power information of the downlink reference signal(s) and/or the downlink channel(s); or transmit spatial filter information of the downlink reference signal(s) and/or the downlink channel(s).

In embodiments of the present disclosure, a network node may include a TRP.

In embodiments of the present disclosure, the first signal, which may also be referred to as a superimposed signal, represents a signal and/or a channel transmitted on the same time-frequency resources.

The terminal device may receive one or more of the time-frequency location information of the downlink reference signal and/or the downlink channel, the power information of the downlink reference signal and/or the downlink channel, or the transmit spatial filter information of the downlink reference signal and/or the downlink channel from the network device. The terminal device uses such information as auxiliary information for decomposing the first signal, and decomposes the first signal received from the at least two network nodes, so as to obtain the downlink reference signal and/or the downlink channel. In this way, multiple network nodes transmit signals and/or channels on the same time-frequency resources.

In embodiments of the present disclosure, the downlink channel may include a downlink control channel and/or a downlink data channel.

In some embodiments, the terminal device may adopt a pre-trained neural network model. The terminal device inputs the first signal into the neural network model, and inputs at least one of the time-frequency location information of the downlink reference signal and/or the downlink channel, the power information of the downlink reference signal and/or the downlink channel, or the transmit spatial filter information of the downlink reference signal and/or the downlink channel into the neural network model. The neural network model outputs the downlink reference signal and/or the downlink channel. For example, the neural network model may output an estimated downlink reference signal and/or a decoded downlink channel.

In some embodiments, an AI/ML-based SIP receiver or a CNN model may be configured in the terminal device, and the SIP receiver or the CNN model is used to decompose a superimposed signal.

In some embodiments, time-frequency resources of the downlink reference signal and/or the downlink channel transmitted by the at least two network nodes partially superimposed or fully superimposed.

In some embodiments, the downlink reference signal and/or the downlink channel transmitted by at least two network nodes form a superimposed space, where the superimposed space includes a reference signal layer and/or a data layer. The reference signal layer corresponds to downlink reference signal, and the data layer corresponds to the downlink channel. Moreover, the reference signal layer and the data layer in the superimposed space may be partially superimposed or fully superimposed.

Downlink reference signals transmitted by different network nodes may be multiplexed in the same reference signal layer. For example, a multiplexing manner of the downlink reference signals transmitted by different network nodes includes one or more of time division multiplexing, frequency division multiplexing, code division multiplexing, or space division multiplexing. Alternatively, downlink reference signals transmitted by different network nodes correspond to different reference signal layers.

A conventional UE may exist in the network, that is, a UE that does not support transmission of signals and/or channels by multiple network nodes on the same time-frequency resources. If a UE supports transmission of signals and/or channels by multiple network nodes on the same time-frequency resources, the UE may report the capability to a network device, such as a base station.

For example, before operations at S410 described above, the terminal device may send first information, where the first information indicates whether the terminal device supports partial or full superimposition of time-frequency resources of the downlink reference signal and/or the downlink channel transmitted by at least two network nodes.

By reporting capability information from the terminal device to the network device, the network device may send auxiliary information for decomposing the first signal to a UE that supports partial or full superimposition of time-frequency resources of the downlink reference signal and/or the downlink channel transmitted by at least two network nodes. The auxiliary information is one or more of the time-frequency location information of the downlink reference signal and/or the downlink channel, the power information of the downlink reference signal and/or the downlink channel, and the transmit spatial filter information of the downlink reference signal and/or the downlink channel. The terminal device receives one or more of the foregoing information.

In some embodiments, the terminal device receives time-frequency location information of the downlink reference signal and/or the downlink channel as follows. The terminal device receives a first configuration or a first indication, where the first configuration or the first indication is used to configure or indicate the time-frequency location information of the downlink reference signal and/or the downlink channel of different network nodes. The terminal device may receive the first configuration or the first indication from a network device, and the network device may include a base station or a TRP.

The first configuration or the first indication may include one or more of radio resource control (RRC) signaling, media access control-control element (MAC CE) signaling, or DCI.

In an example, when the downlink reference signal includes periodic channel state information-reference signals (CSI-RS), the terminal device receives the first configuration or the first indication as follows. The terminal device receives RRC signaling, where the RRC signaling configures time-frequency resources of the periodic CSI-RS.

In another example, when the downlink reference signal includes semi-persistent CSI-RS, the terminal device receives the first configuration or the first indication as follows. The terminal device receives RRC signaling, where the RRC signaling configures time-frequency resources of CSI-RS, and the time-frequency resources of the CSI-RS configured by the RRC signaling include time-frequency resources of the semi-persistent CSI-RS. The terminal device receives MAC CE signaling, where the MAC CE signaling activates or deactivates the semi-persistent CSI-RS.

In another example, when the downlink reference signal includes an aperiodic CSI-RS, the terminal device receives the first configuration or the first indication as follows. The terminal device receives RRC signaling, where the RRC signaling configures time-frequency resources of a CSI-RS, and the time-frequency resources of the CSI-RS configured by the RRC signaling include time-frequency resources of the aperiodic CSI-RS. The terminal device receives DCI, where the DCI schedules the aperiodic CSI-RS.

In another example, when the downlink reference signal includes a DMRS, the terminal device receives the first configuration or the first indication as follows. The terminal device receives RRC signaling, where the RRC signaling configures time-frequency resources of the DMRS, and the time-frequency resources of the DMRS configured by the RRC signaling include time-frequency resources of an aperiodic DMRS. The terminal device receives DCI, where the DCI schedules the aperiodic DMRS.

Through the foregoing multiple manners, the terminal device may receive time-frequency location information of the downlink reference signal and/or the downlink channel for different network nodes configured or indicated by the network device, and such information may serve as one piece of auxiliary information for decomposing the first signal.

In some embodiments, the power information of the downlink reference signal and/or the downlink channel used by the terminal device to decompose the first signal may include one or more of the following: a transmit power ratio between the downlink reference signal(s) and/or the downlink channel (s); or a path loss of each network node among the at least two network nodes.

Alternatively, the power information of the downlink reference signal and/or the downlink channel used by the terminal device to decompose the superimposed signal may include: a received power ratio between the downlink reference signal and/or the downlink channel.

The received power ratio between the downlink reference signal and/or the downlink channel may be determined according to one or more of the following: a transmit power ratio between the downlink reference signal and/or the downlink channel; or a path loss of each network node among the at least two network nodes.

The transmit power ratio between the downlink reference signal and/or the downlink channel may include one or more of the following: a transmit power ratio between various downlink reference signals; or a transmit power ratio between the downlink reference signal and the downlink channel.

In some embodiments, the terminal device receives the power information of the downlink reference signal and/or the downlink channel as follows. The terminal device receives a second configuration or a second indication, where the second configuration or the second indication is used to configure or indicate a transmit power ratio between the downlink reference signal and/or the downlink channel. The terminal device may receive the second configuration or the second indication from a network device, and the network device may include a base station or a TRP.

The second configuration or the second indication may include one or more of RRC signaling, MAC CE signaling, or DCI.

In an example, that the terminal device receives the second configuration or the second indication as followed. The terminal device receives RRC signaling, where the RRC signaling configures a transmit power ratio between the downlink reference signal and/or the downlink channel.

In another example, the terminal device receives the second configuration or the second indication as followed. The terminal device receives RRC signaling, where the RRC signaling configures a set of transmit power ratios. The terminal device receives MAC CE signaling, where the MAC CE signaling activates one transmit power ratio in the set of transmit power ratios.

In another example, the terminal device receives the second configuration or the second indication as follows. The terminal device receives RRC signaling, where the RRC signaling configures a set of transmit power ratios. The terminal device receives MAC CE signaling, where the MAC CE signaling activates a subset of the set of transmit power ratios. The terminal device receives DCI, where the DCI indicates one transmit power ratio in the subset.

In another example, the terminal device receives the second configuration or the second indication as follows. The terminal device receives MAC CE signaling, where the MAC CE signaling indicates a transmit power ratio between the downlink reference signal and/or the downlink channel.

In another example, the terminal device receives the second configuration or the second indication as follows. The terminal device receives DCI, where the DCI indicates a transmit power ratio between the downlink reference signal and/or the downlink channel.

Through the foregoing multiple manners, the terminal device may receive the transmit power ratio between the downlink reference signal and/or the downlink channel configured or indicated by the network device, and such information may serve as one piece of auxiliary information for decomposing the first signal.

Detailed descriptions are hereinafter given with reference to the accompanying drawings in conjunction with specific embodiments. In the following embodiments, description is made by taking a case where a UE receives the downlink reference signal and/or the downlink channel sent by two TRPs on the same time-frequency resources as an example. The embodiments of the present disclosure are also applicable to a case where a UE receives reference signals and/or downlink channels sent by multiple TRPs. In the following examples, a network node is taken as a TRP for illustration. In the embodiments of the present disclosure, the UE may further receive the downlink reference signal and/or the downlink channel transmitted by other network nodes on the same time-frequency resources.

### Embodiment 1:

In this embodiment, in a multi-TRP scenario, each TRP transmits its own downlink reference signal, such as CSI-RS or SSB. Various TRPs transmits respective downlink reference signals on the same time-frequency resources, and the downlink reference signals from different TRPs are partially superimposed (Partial SIP) or fully superimposed (SIP). That is, the time-frequency resources occupied by downlink reference signals transmitted by different TRPs are partially identical or completely identical. For example, partial superimposition occurs between different types of reference signals (e.g., CSI-RS and SSB), and full superimposition occurs between reference signals of the same type (e.g., SSB and SSB).

FIG.5 is a schematic diagram of a transmission scheme with partial superimposition between CSI-RS and SSB according to Embodiment 1 of the present disclosure. As illustrated in FIG.5, the CSI-RS and the SSB are transmitted by two different TRPs respectively, and the two TRPs transmit CSI-RS and SSB respectively on the same time-frequency resources. In the example illustrated in FIG.5, time-frequency resources of the CSI-RS is partially superimposed with those of the SSB. The CSI-RS and the SSB form a superimposed space, which includes two layers, namely a first layer (layer #1) and a second layer (layer #2), where one layer corresponds to the SSB, and the other layer corresponds to the CSI-RS.

A conventional UE may exist in the network, where the conventional UE refers to a UE that does not support partial or full superimposition of time-frequency resources of a downlink reference signal(s) and/or a downlink channel(s) transmitted by at least two network nodes. If a UE is equipped with an AI/ML-based SIP receiver, that is, the UE is capable of supporting partial or full superimposition of time-frequency resources of a downlink reference signal(s) and/or a downlink channel(s) transmitted by at least two network nodes, the UE may report such capability to the NW, for example, to a base station. In an implementation, the terminal device sends first information, where the first information indicates whether the terminal device supports partial or full superimposition of time-frequency resources of a downlink reference signal(s) and/or a downlink channel(s) transmitted by at least two network nodes.

In this embodiment, a UE capability indicated by the first information may include one or more of the following, but is not limited to, one or more of the following: (1) whether to support transmission with partial or full superimposition between SSB and CSI-RS; (2) whether to support transmission with partial or full superimposition between SSB and SSB; or (3) whether to support transmission with partial or full superimposition between CSI-RS and CSI-RS.

In this way, multiple TRPs can simultaneously transmit their respective downlink reference signals on partially identical or completely identical time-frequency resources and complete corresponding transmission tasks. For instance, TRP#1 may transmit SSB for beam scanning, and TRP#2 may transmit CSI-RS for time-frequency domain tracking.

After receiving signals transmitted by multiple TRPs on the same time-frequency resources, the UE needs to decompose downlink reference signals and/or decoded downlink channels from the received signals. To correctly decompose the signals, the network device needs to configure or indicate at least one of the following information for the UE. The UE takes the following information configured or indicated by the network device as auxiliary input for the SIP receiver or the CNN model, and the SIP receiver or the CNN model decomposes the signals to obtain downlink reference signals and/or decoded downlink channels.

First, the network device configures or indicates time-frequency location information of reference signals in the superimposed space for the terminal device.

The network device may configure or indicate time-frequency location information of each reference signal in the superimposed space for the terminal device, such as time-frequency location information of CSI-RS and time-frequency location information of SSB. Based on time-frequency location information of each reference signal, the terminal device can derive a superimposed time-frequency position between different reference signals.

For example, when different TRPs transmit CSI-RS and SSB respectively on the same time-frequency resources, the network device needs to notify the UE of time-frequency location information of a downlink reference signal of each TRP per layer, as follows.

A first layer of reference signal (RS) is CSI-RS, and the network device may indicate it to the UE in one of the following manners:
(1) Configuring time-frequency resources of periodic CSI-RS via RRC signaling;
(2) Configuring time-frequency resources of CSI-RS via RRC signaling, and activating or deactivating semi-persistent CSI-RS via MAC CE signaling;
(3) Configuring time-frequency resources of CSI-RS via RRC signaling, and scheduling aperiodic CSI-RS via DCI.

A second layer of RS is periodic SSB, and the network device may indicate it to the UE by configuring time-frequency resources of periodic SSB via RRC signaling.

The first layer of RS and the second layer of RS are downlink reference signals transmitted by different TRPs respectively.

For another example, when different TRPs transmit CSI-RS and CSI-RS respectively on the same time-frequency resources, the network device needs to notify the UE of time-frequency location information of a downlink reference signal of each TRP per layer, as follows.

A first layer of RS is CSI-RS, and the network device may indicate it to the UE in one of the following manners:
(1) Configuring time-frequency resources of periodic CSI-RS via RRC signaling;
(2) Configuring time-frequency resources of CSI-RS via RRC signaling, and activating or deactivating semi-persistent CSI-RS via MAC CE signaling; or
(3) Configuring time-frequency resources of CSI-RS via RRC signaling, and scheduling aperiodic CSI-RS via DCI.

A second layer of RS is CSI-RS, and the network device may indicate it to the UE in one of the following manners:
(1) Configuring time-frequency resources of periodic CSI-RS via RRC signaling;
(2) Configuring time-frequency resources of CSI-RS via RRC signaling, and activating or deactivating semi-persistent CSI-RS via MAC CE signaling; or
(3) Configuring time-frequency resources of CSI-RS via RRC signaling, and scheduling aperiodic CSI-RS via DCI.

The first layer of RS and the second layer of RS are downlink reference signals transmitted by different TRPs respectively.

For another example, when different TRPs transmit SSB and SSB respectively on the same time-frequency resources, the network device needs to notify the UE of time-frequency location information of a downlink reference signal of each TRP per layer, as follows.

A first layer of RS is periodic SSB, and the network device may indicate it to the UE by configuring time-frequency resources of periodic SSB via RRC signaling.

A second layer of RS is periodic SSB, and the network device may indicate it to the UE by configuring time-frequency resources of periodic SSB via RRC signaling.

The first layer of RS and the second layer of RS are downlink reference signals transmitted by different TRPs respectively.

Second, the network device configures or indicates power information of reference signals in the superimposed space for the terminal device.

Since transmission is performed on the same time-frequency resources, power of signals received by the UE is superimposed. The UE is unable to derive the received power of a reference signal from a certain TRP from the total received power, and thus signaling support from the NW side is required. It is assumed that the UE can measure the path loss of each TRP through non-superimposed reference signals (conventional Non-SIP reference signals). In this case, the NW only needs to notify the UE of a transmit power ratio between downlink reference signals from different TRPs, and the UE can approximately calculate the received power ratio of the superimposed reference signals.

A transmit power ratio between reference signals from TRPs may be implemented via signaling in at least one of the following manners:
(1) The NW configures a transmit power ratio between two reference signals via RRC signaling;
(2) The NW configures a set of transmit power ratios between reference signals via RRC signaling, and activates one transmit power ratio via MAC CE signaling;
(3) The NW configures a set of transmit power ratios between reference signals via RRC signaling, activates a subset of the set of transmit power ratios via MAC CE signaling, and finally indicates one transmit power ratio in the subset via DCI, where the indicated transmit power ratio serves as the transmit power ratio between the two reference signals indicated by the NW for the UE;
(4) The NW directly indicates a transmit power ratio between two reference signals via MAC CE signaling;
(5) The NW directly indicates a transmit power ratio between two reference signals via DCI.

For example, the power unit of CSI-RS #1 transmitted by TRP #1 is EPRE #1, and the power unit of SSB #2 transmitted by TRP #2 is EPRE #2. The transmit power ratio between the two signals is EPRE #1/EPRE #2, which is generally expressed in dB, i.e., 10log(EPRE #1/EPRE #2).

According to the transmit power ratio, the path loss of TRP #1 (denoted as Path Loss #1), and the path loss of TRP #2 (denoted as Path Loss #2), the received power ratio between CSI-RS #1 and SSB #2 can be calculated to be equal to EPRE #1 * Path Loss #1/(EPRE #2 * Path Loss #2)

Third, the network device configures or indicates spatial information of a reference signal(s) and/or a channel(s) transmitted by various TRPs on the same time-frequency resources for the terminal device.

For example, the spatial information may include: a transmission direction of CSI-RS or SSB transmitted by different TRPs (related to a transmit spatial filter), and a receive beam adopted by the UE (related to a receive spatial filter) for corresponding reception. Adoption of different receive spatial filters affects the received power of reference signals. For example, when the UE regards a downlink reference signal from a certain TRP as interference, the UE shall select a receive spatial filter that maximizes the power of a desired signal and minimizes the power of a superimposed interfering reference signal, so as to maximize the signal to interference plus noise ratio (SINR) and improve the quality of reception detection or estimation.

In NR, the NW may indicate transmit spatial filters for CSI-RS, PDCCH, and PDSCH through a TCI state. Selection of the receive spatial filter adopted by the UE is an implementation issue of the UE, which provides a basis for selecting a receive spatial filter for the AI/ML-based SIP receiver or CNN model.

In addition, SSB itself is the source of the Quasi-Co-Location (QCL) relationship, and one SSB corresponds to a specific transmit spatial filter, so no additional TCI state indication is required.

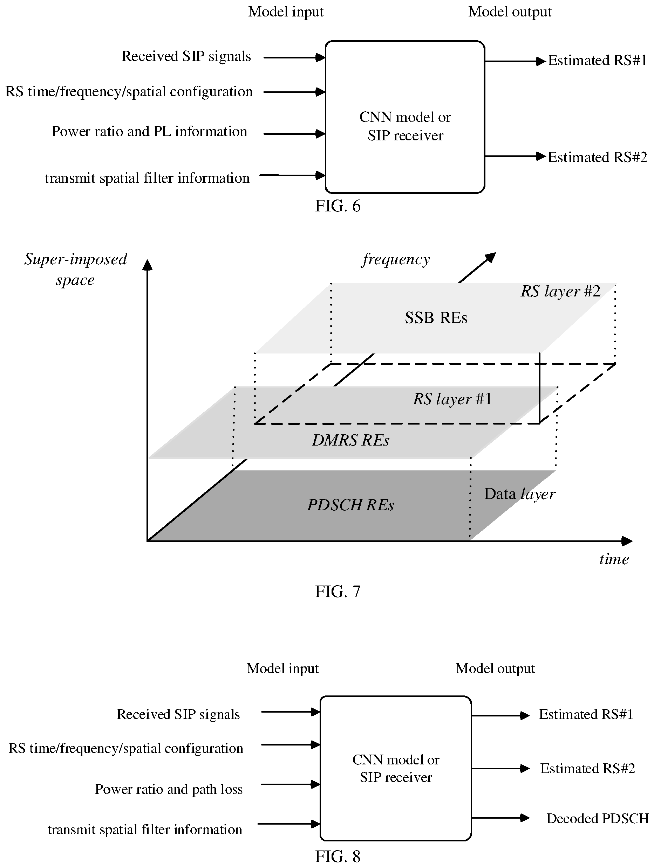

With the foregoing information configured or indicated by the network device, the UE may process the received reference signals by using an AI/ML-based SIP receiver or CNN model. As illustrated in FIG.6, the UE may use the AI/ML-based SIP receiver or CNN model to process multiple reference signals transmitted on the same time-frequency resources. The received signals (also referred to as superimposed signals, superimposed reference signals, or SIP signals) are input into the SIP receiver or CNN model; one or any combination of the following information is used as auxiliary information and also input into the SIP receiver or CNN model, as illustrated in FIG.6:
(1) Time-frequency location information of superimposed reference signals;
(2) Transmit power ratio information and path loss information (PL information) of superimposed reference signals; or
(3) Transmit spatial filter information of superimposed reference signals.

The SIP receiver or CNN model decomposes the multiple received reference signals transmitted on the same time-frequency resources by using the auxiliary information, and can estimate a first downlink reference signal (such as RS#1 in FIG.6) and a second downlink reference signal (such as RS#2 in FIG.6). The first downlink reference signal may include CSI-RS or SSB, and the second downlink reference signal may also include CSI-RS or SSB.

### Embodiment 2:

In this embodiment, in a multi-TRP scenario, one of the TRPs transmits a downlink reference signal, such as CSI-RS or SSB; the other TRP transmits a downlink channel, such as PDCCH or PDSCH, with an accompanying DMRS layer. The downlink reference signal and channel from different TRPs may partially superimposed (Partial SIP) or fully superimposed (SIP), i.e., time-frequency resources occupied by a downlink reference signal(s) or a downlink channel(s) transmitted by different TRPs are partially identical or completely identical.

FIG. 7 is a schematic diagram of a transmission scheme with partial superimposition among PDSCH, DMRS and SSB according to Embodiment 2 of the present disclosure. As illustrated FIG. 7, PDSCH and DMRS are transmitted by one TRP and SSB is transmitted by the other TRP, and the two TRPs transmit separately on the same time-frequency resources. In the example illustrated FIG. 7, PDSCH and DMRS transmitted by the same TRP occupy the same time-frequency resources, which is partially superimposed with time-frequency resource occupied by SSB transmitted by the other TRP.

In FIG. 7, downlink transmissions of multiple TRPs form one data layer and two reference signal layers. Conceptually, this may be regarded as a superimposed space of data and reference signals, which can be simply classified into two categories:

A first category is a reference signal superimposed space. When multiple reference signal layers are partially or fully superimposed, they form a reference signal superimposed space (with more than one layer).

A second category is a superimposed space of reference signals and channels. When multiple reference signal layers are partially or fully superimposed with one or more channel layers, a composite space with superimposed reference signals and channels is formed (with more than one layer).

The concept of the superimposed space is also applicable to similar scenarios in other embodiments.

A conventional UE may exist in the network, where the conventional UE refers to a UE that does not support partial or full superimposition of time-frequency resources of a downlink reference signal(s) and/or a downlink channel(s) transmitted by at least two network nodes. If a UE is equipped with an AI/ML-based SIP receiver, that is, the UE is capable of supporting partial or full superimposition of time-frequency resources of a downlink reference signal(s) and/or a downlink channel(s) transmitted by at least two network nodes, the UE may report such capability to the NW, for example, to a base station. In an implementation, the terminal device sends first information, where the first information indicates whether the terminal device supports partial or full superimposition of time-frequency resources of a downlink reference signal(s) and/or a downlink channel(s) transmitted by at least two network nodes.

In this embodiment, a UE capability indicated by the first information may include, but is not limited to, one or more of the following: (1) whether to support transmission with partial or full superimposition between a control channel or data channel and CSI-RS; or (2) whether to transmission with partial or full superimposition between a control channel or data channel and SSB.

The technical advantage of this embodiment is as follows. When a TRP transmits a downlink reference signal (e.g., for mobility measurement), the conventional solution needs to configure a measurement gap for the UE. During the measurement gap, the UE cannot perform transmission and reception. In contrast, the solution provided in embodiments of the present disclosure allows different TRPs to transmit reference signals and channels on the same time-frequency resources, and the UE can still receive downlink transmissions including PDCCH and/or PDSCH from another TRP.

After receiving signals transmitted by multiple TRPs on the same time-frequency resources, the UE needs to decompose downlink reference signals and/or decoded downlink channels from the received signals. To correctly decompose the signals, the network device needs to configure or indicate at least one of the following information for the UE. The UE takes the following information configured or indicated by the network device as auxiliary input for the SIP receiver or the CNN model, and the SIP receiver or the CNN model decomposes the signals to obtain downlink reference signals and/or decoded downlink channels.

First, the network device configures or indicates time-frequency location information of reference signals in the superimposed space for the terminal device.

The network device may configure or indicate time-frequency location information of each reference signal in the superimposed space for the terminal device, such as time-frequency location information of CSI-RS/SSB and DMRS. The terminal device may derive a superimposed time-frequency position between different reference signals according to the time-frequency location information of each reference signal.

For example, when different TRPs transmit CSI-RS and DMRS respectively on the same time-frequency resources, the network device shall notify the UE of time-frequency location information of a downlink reference signal of each TRP per layer as follows.

A first layer of RS is CSI-RS, and the network device may indicate it to the UE in one of the following manners:
(1) Configuring time-frequency resources of periodic CSI-RS via RRC signaling;
(2) Configuring time-frequency resources of CSI-RS via RRC signaling, and activating or deactivating semi-persistent CSI-RS via MAC CE signaling;
(3) Configuring time-frequency resources of CSI-RS via RRC signaling, and scheduling aperiodic CSI-RS via DCI.

A second layer of RS is DMRS, and the network device may indicate it to the UE in one of the following manners:
(1) Configuring time-frequency resources of DMRS via RRC signaling;
(2) Configuring time-frequency resources of DMRS via RRC signaling, and scheduling DMRS via DCI.

The first layer RS and the second layer RS are downlink reference signals transmitted by different TRPs respectively.

For another example, when different TRPs transmit SSB and DMRS respectively on the same time-frequency resources, the network device shall notify the UE of time-frequency location information of a downlink reference signal per layer as follows.

A first layer of RS is periodic SSB, and the network device may indicate it to the UE by configuring time-frequency resources of periodic SSB via RRC signaling.

A second layer of RS is DMRS, and the network device may indicate it to the UE in one of the following manners:
(1) Configuring time-frequency resources of DMRS via RRC signaling;
(2) Configuring time-frequency resources of DMRS via RRC signaling, and scheduling DMRS via DCI.

The first layer RS and the second layer RS are downlink reference signals transmitted by different TRPs respectively.

Second, the network device configures or indicates, for the terminal device, transmit power ratio information between reference signals and/or transmit power ratio information between a reference signal and a channel in the superimposed space.

It can be noted that DMRS and PDSCH adopt the same analog beamforming (if applicable) and precoding. It is assumed that DMRS and PDSCH adopt the same transmit power or transmit powers with a fixed offset (e.g., 3 dB) that is configured or indicated in advance, and pass through the same channel. Received powers at the UE side still maintains a preconfigured ratio, i.e., 0 dB (same transmit power) or 3 dB (preconfigured power offset).

Similarly, in this embodiment, it is assumed that the UE can estimate a path loss from each TRP to the UE by using other downlink reference signals from multiple TRPs, such as path loss reference signal (PL RS). On this basis, the NW may inform the UE of a transmit power ratio between a first-layer of DMRS and a second-layer of CSI-RS or SSB via signaling. The UE can roughly estimate a received power ratio between layers in the received superimposed space according to the transmit power ratio.

A transmit power ratio between reference signals from TRPs may be implemented via signaling in at least one of the following manners:
(1) The NW configures a transmit power ratio between two reference signals via RRC signaling;
(2) The NW configures a set of transmit power ratios between reference signals via RRC signaling, and activates one transmit power ratio via MAC CE signaling;
(3) The NW configures a set of transmit power ratios between reference signals via RRC signaling, activates a subset of the set of transmit power ratios via MAC CE signaling, and finally indicates one transmit power ratio in the subset via DCI, where the indicated transmit power ratio serves as the transmit power ratio between the two reference signals indicated by the NW for the UE;
(4) The NW directly indicates a transmit power ratio between two reference signals via MAC CE signaling; or
(5) The NW directly indicates a transmit power ratio between two reference signals via DCI.

For example, the power unit of DMRS #1 transmitted by TRP #1 is EPRE #1, the power unit of PDSCH #1 transmitted by TRP #1 is EPRE #2, and the power unit of SSB #2 transmitted by TRP #2 is EPRE #3. The power ratio between PDSCH and its associated DMRS may be given by RRC pre-configuration or dynamic DCI indication, for example, 0 dB, namely EPRE #1/EPRE #2 = 1. In addition, the power ratio between DMRS and SSB is EPRE #1/EPRE #3, which is usually expressed in dB, i.e., 10log(EPRE #1/EPRE #3).

According to the transmit power ratio, the path loss of TRP #1 (denoted as Path Loss #1), and the path loss of TRP #2 (denoted as Path Loss #2), the received power ratio between DMRS #1 and SSB #2 is calculated to be equal to EPRE #1 * Path Loss #1 / (EPRE #3 * Path Loss #2).

Third, the network device configures or indicates spatial information of a reference signal(s) and/or a channel(s) transmitted by various TRPs on the same time-frequency resources for the terminal device.

In this embodiment, the transmit spatial filter for DMRS and PDSCH transmitted by TRP #1 is identical, but is generally different from that for CSI-RS/SSB transmitted by TRP #2. The UE adopts a corresponding receive beam, i.e., a receive spatial filter, for corresponding reception. Adoption of different receive spatial filters affects the received power of reference signals and channels, and further affects the performance of the SIP receiver.

With the foregoing information configured or indicated by the network device, the UE may adopt an AI/ML-based SIP receiver or CNN model to process multiple reference signals and/or channels transmitted by different TRPs on the same time-frequency resources. As illustrated in FIG. 8, the UE processes the received signals by using the AI/ML-based SIP receiver or CNN model. The received signals (also referred to as superimposed signals, superimposed reference signals, or SIP signals) are input into the SIP receiver or CNN model. One or any combination of the following information is used as auxiliary information and also input into the SIP receiver or CNN model:
(1) Time-frequency location information of superimposed reference signals and time-frequency location information of PDSCH;
(2) Transmit power ratio information of superimposed reference signals, transmit power ratio information between DMRS and PDSCH, and path loss information (PL information); or
(3) Transmit spatial filter information of superimposed reference signals.

The AI/ML-based SIP receiver estimates a first reference signal (DMRS), a second reference signal (CSI-RS or SSB), and decodes a first data channel (PDSCH) from the superimposed space.

The AI/ML receiver or CNN model learns to distinguish different signals and channels under specific configurations through pre-training. A feasible interpretation of the AI/ML-based SIP receiver or CNN model is as follows. The AI/ML-based SIP receiver or CNN model first separates DMRS from the superimposed space of reference signals and channels, obtains channel estimation for one TRP, and then decodes PDSCH associated with the DMRS. Finally, the AI/ML-based SIP receiver or CNN model recovers and eliminates the influence of PDSCH and DMRS from the received SIP signal, so as to obtain estimation of a reference signal transmitted by the other TRP, i.e., SSB in this example.

### Embodiment 3

In this embodiment, downlink reference signals from different TRPs are multiplexed onto the same reference signal layer in an orthogonal or quasi-orthogonal manner. One TRP transmits a downlink channel, and the downlink reference signals from different TRPs and the downlink channel form a superimposed space. The superimposed space includes a reference signal layer and a data layer, where the reference signal layer corresponds to downlink reference signals, and the data layer corresponds to the downlink channel.

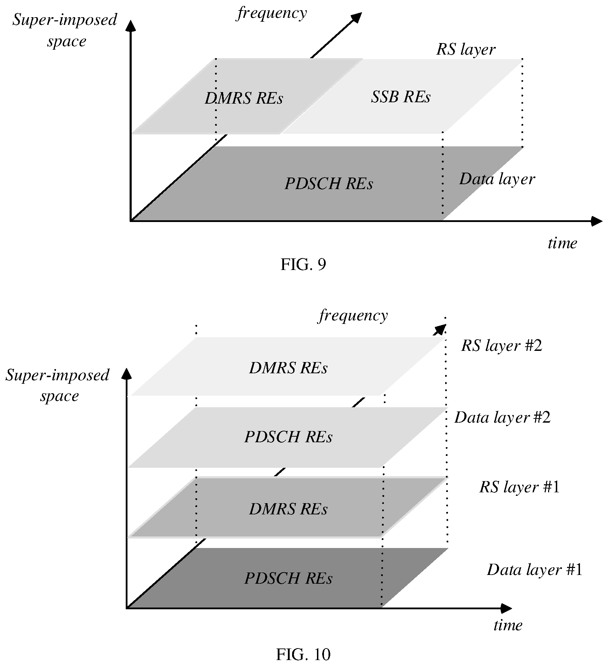

FIG. 9 is a schematic diagram of a transmission scheme in which DMRS and other downlink reference signals are multiplexed onto one RS layer according to Embodiment 3 of the present disclosure. As illustrated in FIG. 9, DMRS from TRP #1 and SSB from TRP #2 are orthogonally multiplexed onto the same RS layer in a TDM manner. In addition to the TDM manner, the orthogonal multiplexing manner may also be FDM or CDM in some embodiments. In addition, if the UE adopts a specific receive beam to ensure low interference between transmit spatial filters of multiple TRPs, SDM may be adopted. Downlink reference signals and downlink channels transmitted by TRP #1 and TRP #2 form a superimposed space, which includes two layers: an RS layer and a data layer. The RS layer corresponds to DMRS from TRP #1 and SSB from TRP #2, and the data layer corresponds to the downlink channel from TRP #1.

In this embodiment, if a UE is equipped with an AI/ML-based SIP receiver, that is, the UE is capable of supporting partial or full superimposition of time-frequency resources of a downlink reference signal(s) and/or a downlink channel(s) transmitted by at least two network nodes, the UE may report such capability to the NW, for example, to a base station. In an implementation, the terminal device sends first information, where the first information indicates whether the terminal device supports partial or full superimposition of time-frequency resources of a downlink reference signal(s) and/or a downlink channel(s) transmitted by at least two network nodes.

In this embodiment, an UE capability indicated by the first information may include, but is not limited to, one or more of the following:
(1) Whether to support TDM transmission between DMRS and CSI-RS or SSB;
(2) Whether to support FDM transmission between DMRS and CSI-RS or SSB;
(3) Whether to support CDM transmission between DMRS and CSI-RS or SSB;
(4) Whether to support SDM transmission between DMRS and CSI-RS or SSB; or
(5) Whether to support superimposed transmission of PDSCH and CSI-RS or SSB.

In this way, when downlink reference signals maintain orthogonal or quasi-orthogonal (such as TDM, CDM, FDM, or SDM), the complexity of the AI/ML-based SIP receiver or CNN model can be reduced, and superimposed reference signals can be decoded more easily.

The AI/ML-based SIP receiver or CNN model can separate the RS layer and the data layer on the premise that necessary information is known to the AI/ML-based SIP receiver or CNN model. Specifically, the network device may configure or indicate at least one of the following information for the UE. The UE takes the following information configured or indicated by the network device as auxiliary input for the SIP receiver or CNN model. The SIP receiver or CNN model decomposes downlink reference signals and/or downlink channels transmitted by at least two network nodes on the same time-frequency resources, so as to obtain downlink reference signals and/or decoded downlink channels.

First, the network device configures or indicates time-frequency location information of reference signals in the superimposed space and a multiplexing manner between reference signals for the terminal device.

For example, the network device may configure or indicate time-frequency location information of each reference signal in the superimposed space for the terminal device, such as time-frequency location information of CSI-RS, SSB, and DMRS.

As illustrated in FIG. 9, when DMRS from TRP #1 and SSB from TRP #2 are multiplexed onto the same RS layer in a TDM manner, the network device indicates time-frequency location information of DMRS and time-frequency location information SSB to the UE respectively:

For DMRS, the network device may indicate it to the UE in one of the following manners:
(1) Configuring time-frequency resources of DMRS via RRC signaling; or
(2) Configuring time-frequency resources of DMRS via RRC signaling, and scheduling DMRS via DCI.

For periodic SSB, the network device may indicate it to the UE by configuring time-frequency resources of periodic SSB via RRC signaling.

For another example, when DMRS and CSI-RS from different TRPs are multiplexed onto the same RS layer in a TDM manner, the network device indicates time-frequency location information of DMRS and time-frequency location information of CSI-RS to the UE respectively:

For DMRS, the network device may indicate it to the UE in one of the following manners:
(1) Configuring time-frequency resources of DMRS via RRC signaling; or
(2) Configuring time-frequency resources of DMRS via RRC signaling, and scheduling DMRS via DCI.

For CSI-RS, the network device may indicate it to the UE in one of the following manners:
(1) Configuring time-frequency resources of periodic CSI-RS via RRC signaling;
(2) Configuring time-frequency resources of CSI-RS via RRC signaling, and activating or deactivating semi-persistent CSI-RS via MAC CE signaling; or
(3) Configuring time-frequency resources of CSI-RS via RRC signaling, and scheduling aperiodic CSI-RS via DCI (indicated relative to a slot where the DCI is located).

Second, the network device configures or indicates a power ratio between various reference signals within the reference signal layer for the terminal device.

For example, the network device configures or indicates a transmit power ratio between downlink reference signals from different TRPs to the terminal device, and the UE can roughly calculate the received power ratio of the downlink reference signals.

The transmit power ratio between downlink reference signals may be implemented via signaling in at least one of the following manners:
(1) The NW configures a transmit power ratio between two reference signals via RRC signaling;
(2) The NW configures a set of transmit power ratios between reference signals via RRC signaling, and activates one transmit power ratio via MAC CE signaling;
(3) The NW configures a set of transmit power ratios between reference signals via RRC signaling, activates a subset of the set of transmit power ratios via MAC CE signaling, and finally indicates one transmit power ratio in the subset via DCI, where the indicated transmit power ratio serves as the transmit power ratio between the two reference signals indicated by the NW for the UE;
(4) The NW directly indicates a transmit power ratio between two reference signals via MAC CE signaling; or
(5) The NW directly indicates a transmit power ratio between two reference signals via DCI.

Between the reference signal layer and the data layer, by configuring and/or indicating a power ratio between DMRS and PDSCH, the AI/ML-based SIP receiver or CNN model can calculate a power ratio on each RE. DMRS and PDSCH superimposed in some REs carry, and SSB/CSI-RS RE and PDSCH are superimposed in other REs. It is worth repeating that the UE has pre-estimated different path losses from multiple TRPs to the UE through PL RS, so as to calculate the power ratio between various layers on different REs at the AI/ML SIP receiver or CNN model.

Third, the network device configures or indicates spatial information of signals and/or channels transmitted by various TRPs on the same time-frequency resources for the terminal device.

For transmissions from different TRPs, DMRS in the reference signal layer and PDSCH in the data layer adopt the same transmit spatial filter, while SSB or CSI-RS in the reference signal layer from another TRP adopts a different transmit spatial filter. Filter information may be indicated to the UE in the form of TCI state or SSB information, and used as model input.

With the foregoing information configured or indicated by the network device, the UE may adopt the AI/ML-based SIP receiver or CNN model to process signals and/or channels transmitted by at least two network nodes on the same time-frequency resources. Reference of an input and output relationship of the SIP receiver or CNN model may be made to FIG. 8 in Embodiment 2. The difference from Embodiment 2 lies in that, in this embodiment, DMRS and other reference signals (such as SSB or CSI-RS) occupy the same reference signal layer in an orthogonal manner.

One interpretation of the AI/ML-based SIP receiver is that the model first estimates the channel from the superimposed DMRS, then decodes PDSCH by a coherent detection method using the channel, and further recovers and eliminates the influence of PDSCH from REs where PDSCH and SSB are superimposed, so as to finally realize estimation of SSB.

### Embodiment 4

In this embodiment, multiple TRPs transmit downlink reference signals and control channels on partially or fully superimposed RE resources.

FIG. 10 is a schematic diagram of a transmission scheme where DMRS and PDSCH from different TRPs are superimposed on different RS layers and data layers according to Embodiment 4 of the present disclosure. As illustrated in FIG. 10, on time-frequency resources, two reference signal layers carrying DMRS and two data layers carrying PDSCH are superimposed to form a superimposed space of data channels and reference signals. The example in FIG. 10 illustrates full superimposition between layers, and this embodiment also supports incomplete superimposition, i.e., partial superimposition.

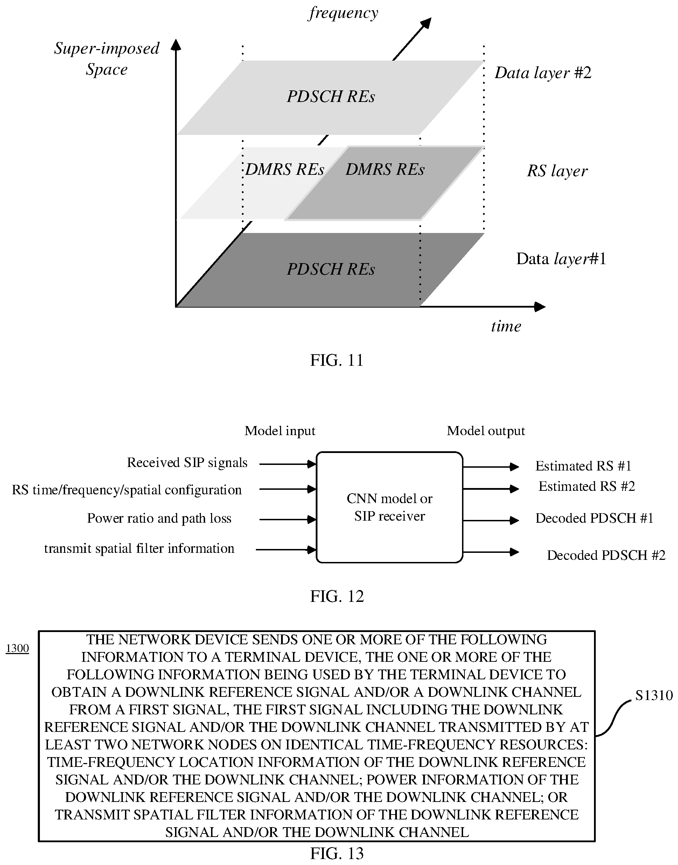

FIG. 11 is a schematic diagram of a transmission scheme in which DMRSs from different TRPs are superimposed onto the same RS layer and PDSCHs from different TRPs are superimposed onto different data layers according to Embodiment 4 of the present disclosure. As illustrated in FIG. 11, on time-frequency resources, one reference signal layer carrying DMRS and two data layers carrying PDSCH are superimposed to form a superimposed space of data channels and reference signals. DMRS from different TRPs are multiplexed onto the same reference signal layer in a TDM manner. DMRS from different TRPs may be multiplexed onto the same reference signal layer in an orthogonal manner (CDM/TDM/FDM) or a quasi-orthogonal manner (SDM).

In this embodiment, if a UE is equipped with an AI/ML-based SIP receiver, that is, the UE is capable of supporting partial or full superimposition of time-frequency resources of a downlink reference signal(s) and/or a downlink channel(s) transmitted by at least two network nodes, the UE may report such capability to the NW, for example, to a base station. In an implementation, the terminal device sends first information, where the first information indicates whether the terminal device supports partial or full superimposition of time-frequency resources of a downlink reference signal(s) and/or a downlink channel(s) transmitted by at least two network nodes.

In this embodiment, an UE capability indicated by the first information may include, but is not limited to, one or more of the following:
(1) Whether to support transmission with partial or full superimposition between a control channel and another control channel;
(2) Whether to support transmission with partial or full superimposition between a control channel and a data channel;
(3) Whether to support transmission with partial or full superimposition between a data channel and another data channel; or
(4) Whether to support transmission with partial or full superimposition between a control channel or a data channel and DMRS.

In this way, downlink scheduling for each TRP can be performed independently. Even if superimposition exists between PDSCH and DMRS, the AI/ML-based SIP receiver or CNN model at the UE side can separate different channels and reference signals according to the information input into the model.

The AI/ML-based SIP receiver or CNN model can separate channels and reference signals on the premise that necessary information is known to the model. Specifically, the network device may configure or indicate at least one of the following information for the UE. The UE takes the following information configured or indicated by the network device as auxiliary input for the SIP receiver or CNN model. The SIP receiver or CNN model decomposes downlink reference signals and/or downlink channels transmitted by at least two network nodes on the same time-frequency resources, so as to obtain downlink reference signals and/or decoded downlink channels.

First, the network device configures or indicates time-frequency location information of reference signals and/or downlink channels in the superimposed space for the terminal device.

For example, the network device configures or indicates RE resource allocation information of each layer in the superimposed space for the terminal device, such as RE resources occupied by a data layer (e.g., PDSCH) and its associated reference signal layer (DMRS).

For example, both a first layer of RS and a second layer of RS are DMRS. The network device indicates time-frequency location information of DMRS in each RS layer to the UE respectively in one of the following manners:
(1) Configuring time-frequency resources of DMRS via RRC signaling; or
(2) Configuring time-frequency resources of DMRS via RRC signaling, and scheduling DMRS via DCI.

The network device may further configure or indicate RE resources occupied by data in each data layer to the terminal device respectively.

Second, the network device configures or indicates, for the terminal device, transmit power ratio information between reference signals and/or transmit power ratio information between a reference signal and a channel in the superimposed space.

For example, the network device configures or indicates a power ratio between each PDSCH and its associated DMRS and/or a power ratio between different DMRSs to the terminal device.

It can be noted that DMRS and PDSCH adopt the same analog beamforming (if applicable) and precoding. It is assumed that DMRS and PDSCH adopt the same transmit power or transmit powers with a fixed offset (e.g., 3 dB) that is configured or indicated in advance, and pass through the same channel. Received powers at the UE side still maintains a preconfigured ratio, i.e., 0 dB (same transmit power) or 3 dB (preconfigured power offset).

In this embodiment, it is assumed that the UE can estimate a path loss from each TRP to the UE by using other downlink reference signals from multiple TRPs, such as PL RS. For example, the NW may inform the UE of a transmit power ratio between a first layer of DMRS and a second layer of DMRS via signaling. The UE can roughly estimate a received power ratio between layers in the superimposed space according to the transmit power ratio.

The transmit power ratio between downlink reference signals may be implemented via signaling in at least one of the following manners:
(1) The NW configures a transmit power ratio between two reference signals via RRC signaling;
(2) The NW configures a set of transmit power ratios between reference signals via RRC signaling, and activates one transmit power ratio via MAC CE signaling;
(3) The NW configures a set of transmit power ratios between reference signals via RRC signaling, activates a subset of the set of transmit power ratios via MAC CE signaling, and finally indicates one transmit power ratio in the subset via DCI, where the indicated transmit power ratio serves as the transmit power ratio between the two reference signals indicated by the NW for the UE;
(4) The NW directly indicates a transmit power ratio between two reference signals via MAC CE signaling; or
(5) The NW directly indicates a transmit power ratio between two reference signals via DCI.

Between the reference signal layer and the data layer, by configuring and/or indicating a power ratio between DMRS and PDSCH, the AI/ML-based SIP receiver or CNN model can calculate a power ratio on each RE. It is worth repeating that the UE has pre-estimated different path losses from multiple TRPs to the UE through PL RS, so as to calculate the power ratio between various layers on different REs at the AI/ML SIP receiver or CNN model.

For example, the power unit of DMRS #1 transmitted by TRP #1 is EPRE RS layer #1, and the power unit of PDSCH #1 transmitted by TRP #1 is EPRE data layer #1. The power ratio between DMRS #1 and PDSCH transmitted by TRP #1 is EPRE RS layer #1 / EPRE data layer #1.

In addition, the power unit of DMRS #2 transmitted by TRP #2 is EPRE RS layer #2. The NW needs to inform the UE of a transmit power ratio between different DMRSs, for example, a transmit power ratio between DMRS #1 and DMRS #2 is EPRE RS layer #1 / EPRE RS layer #2. According to the transmit power ratio, the path loss of TRP #1 (denoted as Path Loss #1), and the path loss of TRP #2 (denoted as Path Loss #2), the received power ratio between DMRS #1 and DMRS #2 is calculated to be equal to EPRE RS layer #1 * Path Loss #1 / (EPRE RS layer 2* Path Loss #2).

Third, the network device configures or indicates spatial information of signals and/or channels transmitted by various TRPs on the same time-frequency resources for the terminal device.

The information of transmit spatial filters adopted by each TRP for transmitting PDSCH and associated DMRS may be indicated to the UE and used as input of the SIP receiver or CNN model. Such information may be indicated to the UE in the form of a TCI state index or an SSB index.

With the foregoing information configured or indicated by the network device, the UE may adopt the AI/ML-based SIP receiver or CNN model to process signals and/or channels transmitted by at least two network nodes on the same time-frequency resources. As illustrated in FIG. 12, the UE processes the received signals by using the AI/ML-based SIP receiver or CNN model. The received signals (also referred to as a superimposed signal, superimposed reference signal, or SIP signal) are input into the SIP receiver or CNN model. One or any combination of the following information is used auxiliary information and also input into the SIP receiver or CNN model:
(1) Time-frequency location information of the superimposed reference signal and PDSCH;
(2) Transmit power ratio information between superimposed reference signals, transmit power ratio information between reference signals and channels, and path loss information (PL information); or
(3) Transmit spatial filter information of superimposed reference signals.

One interpretation of the AI/ML receiver or CNN model is that the model separates one or more layers of DMRS according to power ratio information input into the model, and further obtains estimated channels from multiple TRPs to the UE through DMRS. After separating DMRS, the model further separates superimposed PDSCH and decodes the PDSCH by using respective channels of TRP #1 and TRP #2.

FIG. 13 is a schematic flowchart of a communication method 1300 according to an embodiment of the present disclosure. The method optionally may be applied to any of the systems or application scenarios illustrated FIGS. 1-FIG. 3, but is not limited thereto. The method includes at least some of the following.

S1310, the network device sends one or more of the following information to a terminal device, the one or more of the following information being used by the terminal device to obtain a downlink reference signal and/or a downlink channel from a first signal, the first signal including the downlink reference signal and/or the downlink channel transmitted by at least two network nodes on identical time-frequency resources: time-frequency location information of the downlink reference signal and/or the downlink channel; power information of the downlink reference signal and/or the downlink channel; or transmit spatial filter information of the downlink reference signal and/or the downlink channel.

The network device may include a base station or a TRP.

The foregoing information sent by the network device to the terminal device may serve as auxiliary information adopted by the terminal device when decomposing the first signal, so that the terminal device can utilize the auxiliary information to decompose the downlink reference signal and/or the downlink channel transmitted by the at least two network nodes on the same time-frequency resources.

In one embodiment, time-frequency resources of the downlink reference signal and/or the downlink channel transmitted by the at least two network nodes are partially superimposed or fully superimposed.

In one embodiment, the method further includes the following. The network device receives first information sent by the terminal device, the first information indicating whether the terminal device supports partial or full superimposition of time-frequency resources of the downlink reference signal and/or the downlink channel transmitted by the at least two network nodes.

By receiving the first information, the network device may feed back at least one of: time-frequency location information of the downlink reference signal and/or the downlink channel, power information of the downlink reference signal and/or the downlink channel, or transmit spatial filter information of the downlink reference signal and/or the downlink channel to the terminal device that supports partial or full superimposition of time-frequency resources of the downlink reference signal and/or the downlink channel transmitted by the at least two network nodes, so that the terminal device can decompose the downlink reference signal and/or the downlink channel from the downlink reference signal and/or the downlink channel transmitted by the at least two network nodes on the same time-frequency resources.

In one embodiment, the network device sends the time-frequency location information of the downlink reference signal and/or the downlink channel as follows. The network device sends a first configuration or a first indication to the terminal device, the first configuration or first indication being used to configure or indicate the time-frequency location information of the downlink reference signal and/or the downlink channel of different network nodes.

In one embodiment, the first configuration or first indication includes one or more of: radio resource control (RRC) signaling, media access control-control element (MAC CE) signaling, or downlink control information (DCI).

In one embodiment, when the downlink reference signal includes a periodic channel state information-reference signal (CSI-RS), the network device sends the first configuration or the first indication to the terminal device as follows. The network device sends RRC signaling to the terminal device, the RRC signaling configuring time-frequency resources of the periodic CSI-RS.

In one embodiment, when the downlink reference signal includes a semi-persistent CSI-RS, the network device sends the first configuration or the first indication to the terminal device as follows. The network device sends RRC signaling to the terminal device, the RRC signaling configuring time-frequency resources of a CSI-RS, the time-frequency resources of the CSI-RS configured by the RRC signaling including time-frequency resources of the semi-persistent CSI-RS. The network device sends MAC CE signaling to the terminal device, the MAC CE signaling activating or de-activating the semi-persistent CSI-RS.

In one embodiment, when the downlink reference signal includes an aperiodic CSI-RS, the network device sends the first configuration or the first indication to the terminal device as follows. The network device sends an RRC signaling to the terminal device, the RRC signaling configuring time-frequency resources of a CSI-RS, the time-frequency resources of the CSI-RS configured by the RRC signaling including time-frequency resources of the aperiodic CSI-RS. The network device sends DCI to the end device, the DCI scheduling an aperiodic CSI-RS.

In one embodiment, when the downlink reference signal includes a DMRS, sending, the network device sends the first configuration or the first indication to the terminal device as follows. The network device sends RRC signaling to the terminal device, the RRC signaling configuring time-frequency resources of the DMRS, the time-frequency resources of the DMRS configured by the RRC signaling including time-frequency resources of an aperiodic DMRS. The network device sends DCI to the terminal device, the DCI scheduling the aperiodic DMRS.

By means of the foregoing various manners, the network device may provide time-frequency location information of the downlink reference signal and/or the downlink channel to the terminal device, for the terminal device to decompose the superimposed signals by using such information.

In one embodiment, the power information of the downlink reference signal and/or the downlink channel includes one or more of: a transmit power ratio between the downlink reference signal and/or the downlink channel; or a path loss of each network node among the at least two network nodes.

In one embodiment, the power information of the downlink reference signal and/or the downlink channel includes: a received power ratio between the downlink reference signal and/or the downlink channel.

In one embodiment, the received power ratio between the downlink reference signal and/or the downlink channel is determined according to one or more of: a transmit power ratio between the downlink reference signal and/or the downlink channel; or a path loss of each network node among the at least two network nodes.

In one embodiment, the transmit power ratio between the downlink reference signal and/or the downlink channel includes one or more of: a transmit power ratio between various downlink reference signals; or a transmit power ratio between the downlink reference signal and the downlink channel

In one embodiment, the network device sends the power information of the downlink reference signal and/or the downlink channel to the terminal device as follows. The network device sends a second configuration or a second indication to the terminal device, the second configuration or second indication being used to configure or indicate a transmit power ratio between the downlink reference signal and/or the downlink channel.

In one embodiment, the second configuration or second indication includes one or more of: RRC signaling, MAC CE signaling, or DCI.

In one embodiment, the network device sends the second configuration or the second indication to the terminal device as follows. The network device sends RRC signaling to the terminal device, the RRC signaling configuring a transmit power ratio between the downlink reference signal and/or the downlink channel.

In one embodiment, the network device sends the second configuration or the second indication to the terminal device as follows. The network device sends RRC signaling to the terminal device, the RRC signaling configuring a set of transmit power ratios. The network device sends MAC CE signaling to the terminal device, the MAC CE signaling activating one transmit power ratio in the set of transmit power ratios.

In one embodiment, the network device sends the second configuration or the second indication to the terminal device as follows. The network device sends RRC signaling to the terminal device, the RRC signaling configuring a set of transmit power ratios. The network device sends MAC CE signaling to the terminal device, the MAC CE signaling activating a subset of the set of transmit power ratios. The network device sends DCI to the terminal device, the DCI indicating one transmit power in the subset.

In one embodiment, the network device sends the second configuration or the second indication to the terminal device as follows. The network device sends MAC CE signaling to the terminal device, the MAC CE indicating a transmit power ratio between the downlink reference signal and/or the downlink channel.

In one embodiment, the network device sends the second configuration or the second indication to the terminal device as follows. The network device sends DCI to the terminal device, the DCI indicating a transmit power ratio between the downlink reference signal and/or the downlink channel.

By means of the foregoing various manners, the network device may provide the transmit power ratio between the downlink reference signal and/or the downlink channel to the terminal device, so that the terminal device can decompose superimposed signals by using such information.

In one embodiment, the downlink reference signal and/or the downlink channel transmitted by the at least two network nodes form a superimposed space, and the superimposed space includes a reference signal layer and/or a data layer. The reference signal layer corresponds to the downlink reference signal, and the data layer corresponds to the downlink channel.

In one embodiment, downlink reference signals transmitted by different network nodes are multiplexed on an identical reference signal layer.

In one embodiment, a multiplexing manner of the downlink reference signals transmitted by different network nodes includes one or more of: time division multiplexing, frequency division multiplexing, code division multiplexing, or space division multiplexing.

In one embodiment, downlink reference signals transmitted by different network nodes correspond to different reference signal layers.

In one embodiment, the reference signal layer and the data layer in the superimposed space may be partially superimposed or fully superimposed.

In one embodiment, the downlink channel includes a downlink control channel and/or a downlink data channel.

For specific examples of the network device executing the method 1300 in this embodiment, reference may be made to relevant descriptions of the network device, such as a base station, in the foregoing method 400, which will not be repeated herein for brevity.

In one embodiment, a model training method is further provided in embodiments of the present disclosure. The method includes the following. A neural network model is trained using multiple training samples and labels corresponding to the multiple training samples. A training sample includes a first signal, and the first signal includes a downlink reference signal and/or a downlink channel transmitted by at least two network nodes on identical time-frequency resources. The training sample further includes at least one of: time-frequency location information of the downlink reference signal and/or the downlink channel; power information of the downlink reference signal and/or the downlink channel; or transmit spatial filter information of the downlink reference signal and/or the downlink channel.

In one embodiment, a label corresponding to the training sample includes the downlink reference signal and/or the downlink channel. For example, the label corresponding to the training sample includes a downlink reference signal and/or a demodulated downlink channel.

For specific contents of various types of information contained in training samples and labels, reference may be made to relevant descriptions in the foregoing embodiments, which shall not be repeated herein for brevity.

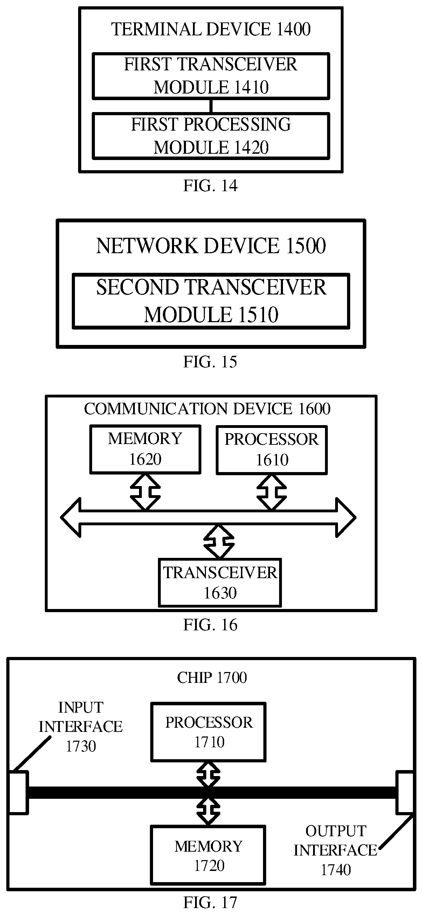

A terminal device is further provided in embodiments of the present disclosure. FIG. 14 is a schematic block diagram of a terminal device 1400 according to an embodiment of the present disclosure. The terminal device 1400 may include a first transceiver module 1410 and a first processing module 1420.

The first transceiver module 1410 is configured to receive a first signal, the first signal including a downlink reference signal and/or a downlink channel transmitted by at least two network nodes on identical time-frequency resources.

The first processing module 1420 is configured to obtain the downlink reference signal and/or the downlink channel from the first signal using one or more of the following information: time-frequency location information of the downlink reference signal and/or the downlink channel; power information of the downlink reference signal and/or the downlink channel; or transmit spatial filter information of the downlink reference signal and/or the downlink channel.

In one embodiment, the first processing module 1420 is configured to input the first signal into a neural network model, and inputting the one or more of the information into the neural network model, where the downlink reference signal and/or the downlink channel are output by the neural network model.

In one embodiment, time-frequency resources of the downlink reference signal and/or the downlink channel transmitted by the at least two network nodes are partially superimposed or fully superimposed.

In one embodiment, the first transceiver module 1410 is further configured to send first information, the first information indicating whether the terminal device supports partial or full superimposition of time-frequency resources of the downlink reference signal and/or the downlink channel transmitted by the at least two network nodes.

In one embodiment, the first transceiver module 1410 is further configured to receive the one or more of the information.

In one embodiment, the first transceiver module 1410 is configured to receive a first configuration or a first indication, the first configuration or first indication being used to configure or indicate the time-frequency location information of the downlink reference signal and/or the downlink channel of different network nodes.

In one embodiment, the first configuration or first indication includes one or more of: radio resource control (RRC) signaling, media access control-control element (MAC CE) signaling, or downlink control information (DCI).

In one embodiment, when the downlink reference signal includes a periodic channel state information-reference signal (CSI-RS), the first transceiver module 1410 is configured to receive RRC signaling, the RRC signaling configuring time-frequency resources of the periodic CSI-RS.

In one embodiment, when the downlink reference signal includes a semi-persistent CSI-RS, the first transceiver module 1410 is configured to receive RRC signaling, the RRC signaling configuring time-frequency resources of a CSI-RS, the time-frequency resources of the CSI-RS configured by the RRC signaling including time-frequency resources of the semi-persistent CSI-RS; and receive MAC CE signaling, the MAC CE signaling activating or deactivating the semi-persistent CSI-RS.

In one embodiment, when the downlink reference signal includes an aperiodic CSI-RS, the first transceiver module 1410 is configured to receive RRC signaling, the RRC signaling configuring time-frequency resources of a CSI-RS, the time-frequency resources of the CSI-RS configured by the RRC signaling including time-frequency resources of the aperiodic CSI-RS; and receive DCI, the DCI scheduling an aperiodic CSI-RS.

In one embodiment, when the downlink reference signal includes a demodulation reference signal (DMRS), the first transceiver module 1410 is configured to receive RRC signaling, the RRC signaling configuring time-frequency resources of the DMRS, the time-frequency resources of the DMRS configured by the RRC signaling including time-frequency resources of an aperiodic DMRS; and receive DCI, the DCI scheduling the aperiodic DMRS.

In one embodiment, the power information of the downlink reference signal and/or the downlink channel includes one or more of: a transmit power ratio between the downlink reference signal and/or the downlink channel; or a path loss of each network node among the at least two network nodes.

In one embodiment, the power information of the downlink reference signal and/or the downlink channel includes: a received power ratio between the downlink reference signal and/or the downlink channel.

In one embodiment, the received power ratio between the downlink reference signal and/or the downlink channel is determined according to one or more of: a transmit power ratio between the downlink reference signal and/or the downlink channel; or a path loss of each network node among the at least two network nodes.

In one embodiment, the transmit power ratio between the downlink reference signal and/or the downlink channel includes one or more of: a transmit power ratio between various downlink reference signals; or a transmit power ratio between the downlink reference signal and the downlink channel.

In one embodiment, the first transceiver module 1410 is configured to receive a second configuration or a second indication, the second configuration or second indication being used to configure or indicate a transmit power ratio between the downlink reference signal and/or the downlink channel.

In one embodiment, the second configuration or second indication includes one or more of: RRC signaling, MAC CE signaling, or DCI.

In one embodiment, the first transceiver module 1410 is configured to receive RRC signaling, the RRC signaling configuring a transmit power ratio between the downlink reference signal and/or the downlink channel.

In one embodiment, the first transceiver module 1410 is configured to receive RRC signaling, the RRC signaling configuring a set of transmit power ratios; and receive MAC CE signaling, the MAC CE signaling activating one transmit power ratio in the set of transmit power ratios.

In one embodiment, the first transceiver module 1410 is configured to receive RRC signaling, the RRC signaling configuring a set of transmit power ratios; receive MAC CE signaling, the MAC CE signaling activating a subset of the set of transmit power ratios; and receive DCI, the DCI indicating one transmit power in the subset.

In one embodiment, the first transceiver module 1410 is configured to receive MAC CE signaling, the MAC CE indicating a transmit power ratio between the downlink reference signal and/or the downlink channel.

In one embodiment, the first transceiver module 1410 is configured to receive DCI, the DCI indicating a transmit power ratio between the downlink reference signal and/or the downlink channel.

In one embodiment, the downlink reference signal and/or the downlink channel transmitted by the at least two network nodes form a superimposed space, and the superimposed space includes a reference signal layer and/or a data layer. The reference signal layer corresponds to the downlink reference signal; and the data layer corresponds to the downlink channel.

In one embodiment, downlink reference signals transmitted by different network nodes are multiplexed on an identical reference signal layer.

In one embodiment, a multiplexing manner of the downlink reference signals transmitted by different network nodes includes one or more of: time division multiplexing, frequency division multiplexing, code division multiplexing, or space division multiplexing.

In one embodiment, downlink reference signals transmitted by different network nodes correspond to different reference signal layers.

In one embodiment, the reference signal layer and the data layer in the superimposed space may be partially superimposed or fully superimposed.

In one embodiment, the downlink channel includes a downlink control channel and/or a downlink data channel.

The terminal device 1400 in embodiments of the present disclosure can implement corresponding functions of the terminal device in the foregoing method embodiments. For the processes, functions, implementations, and beneficial effects corresponding to each module (submodule, unit, component, etc.) in the terminal device 1400, reference may be made to corresponding descriptions of the above method embodiments, which will not be repeated herein for brevity. It can be noted that functions described with respect to each module (submodule, unit, component, etc.) in the terminal device 1400 according to embodiments of the present disclosure may be implemented by different modules (submodules, units, components, etc.), or may also be implemented by the same module (submodule, unit, component, etc.).

A network device is further provided in embodiments of the present disclosure. FIG. 15 is a schematic block diagram of a network device 1500 according to an embodiment of the present disclosure. The network device 1500 may include a second transceiver module 1510 and a second processing module 1520.

The second transceiver module 1510 is configured to send to a terminal device one or more of the following information, the one or more of the following information being used by the terminal device to obtain a downlink reference signal and/or a downlink channel from a first signal, the first signal including the downlink reference signal and/or the downlink channel transmitted by at least two network nodes on identical time-frequency resources: time-frequency location information of the downlink reference signal and/or the downlink channel; power information of the downlink reference signal and/or the downlink channel; or transmit spatial filter information of the downlink reference signal and/or the downlink channel.

In one embodiment, time-frequency resources of the downlink reference signal and/or the downlink channel transmitted by the at least two network nodes are partially superimposed or fully superimposed.

In one embodiment, the second transceiver module 1510 is further configured to receive first information sent by the terminal device, the first information indicating whether the terminal device supports partial or full superimposition of time-frequency resources of the downlink reference signal and/or the downlink channel transmitted by the at least two network nodes.

In one embodiment, the second transceiver module 1510 is configured to send a first configuration or a first indication to the terminal device, the first configuration or first indication being used to configure or indicate the time-frequency location information of the downlink reference signal and/or the downlink channel of different network nodes.

In one embodiment, the first configuration or first indication includes one or more of: radio resource control (RRC) signaling, media access control-control element (MAC CE) signaling, or downlink control information (DCI).

In one embodiment, when the downlink reference signal includes a periodic channel state information-reference signal (CSI-RS), the second transceiver module 1510 is configured to send RRC signaling to the terminal device, the RRC signaling configuring time-frequency resources of the periodic CSI-RS.

In one embodiment, when the downlink reference signal includes a semi-persistent CSI-RS, the second transceiver module 1510 is configured to send RRC signaling to the terminal device, the RRC signaling configuring time-frequency resources of a CSI-RS, the time-frequency resources of the CSI-RS configured by the RRC signaling including time-frequency resources of the semi-persistent CSI-RS; and send MAC CE signaling to the terminal device, the MAC CE signaling activating or de-activating the semi-persistent CSI-RS.

In one embodiment, when the downlink reference signal includes an aperiodic CSI-RS, the second transceiver module 1510 is configured to send an RRC signaling to the terminal device, the RRC signaling configuring time-frequency resources of a CSI-RS, the time-frequency resources of the CSI-RS configured by the RRC signaling including time-frequency resources of the aperiodic CSI-RS; and send DCI to the end device, the DCI scheduling an aperiodic CSI-RS.

In one embodiment, when the downlink reference signal includes a demodulation reference signal (DMRS), the second transceiver module 1510 is configured to send RRC signaling to the terminal device, the RRC signaling configuring time-frequency resources of the DMRS, the time-frequency resources of the DMRS configured by the RRC signaling including time-frequency resources of an aperiodic DMRS; and send DCI to the terminal device, the DCI scheduling the aperiodic DMRS.

In one embodiment, the power information of the downlink reference signal and/or the downlink channel includes one or more of: a transmit power ratio between the downlink reference signal and/or the downlink channel; or a path loss of each network node among the at least two network nodes.

In one embodiment, the power information of the downlink reference signal and/or the downlink channel includes: a received power ratio between the downlink reference signal and/or the downlink channel.

In one embodiment, the received power ratio between the downlink reference signal and/or the downlink channel is determined according to one or more of: a transmit power ratio between the downlink reference signal and/or the downlink channel; or a path loss of each network node among the at least two network nodes.

In one embodiment, the transmit power ratio between the downlink reference signal and/or the downlink channel includes one or more of: a transmit power ratio between various downlink reference signals; or a transmit power ratio between the downlink reference signal and the downlink channel

In one embodiment, the second transceiver module 1510 is configured to send a second configuration or a second indication to the terminal device, the second configuration or second indication being used to configure or indicate a transmit power ratio between the downlink reference signal and/or the downlink channel.

In one embodiment, the second configuration or second indication includes one or more of: RRC signaling, MAC CE signaling, or DCI.

In one embodiment, the second transceiver module 1510 is configured to send RRC signaling to the terminal device, the RRC signaling configuring a transmit power ratio between the downlink reference signal and/or the downlink channel.

In one embodiment, the second transceiver module 1510 is configured to send RRC signaling to the terminal device, the RRC signaling configuring a set of transmit power ratios; and send MAC CE signaling to the terminal device, the MAC CE signaling activating one transmit power ratio in the set of transmit power ratios.

In one embodiment, the second transceiver module 1510 is configured to send RRC signaling to the terminal device, the RRC signaling configuring a set of transmit power ratios; send MAC CE signaling to the terminal device, the MAC CE signaling activating a subset of the set of transmit power ratios; and send DCI to the terminal device, the DCI indicating one transmit power in the subset.

In one embodiment, the second transceiver module 1510 is configured to send MAC CE signaling to the terminal device, the MAC CE indicating a transmit power ratio between the downlink reference signal and/or the downlink channel.

In one embodiment, the second transceiver module 1510 is configured to send DCI to the terminal device, the DCI indicating a transmit power ratio between the downlink reference signal and/or the downlink channel.

In one embodiment, the downlink reference signal and/or the downlink channel transmitted by the at least two network nodes form a superimposed space, and the superimposed space includes a reference signal layer and/or a data layer. The reference signal layer corresponds to the downlink reference signal; and the data layer corresponds to the downlink channel.

In one embodiment, downlink reference signals transmitted by different network nodes are multiplexed on an identical reference signal layer.

In one embodiment, a multiplexing manner of the downlink reference signals transmitted by different network nodes includes one or more of: time division multiplexing, frequency division multiplexing, code division multiplexing, or space division multiplexing.

In one embodiment, downlink reference signals transmitted by different network nodes correspond to different reference signal layers.

In one embodiment, the reference signal layer and the data layer in the superimposed space may be partially superimposed or fully superimposed.

In one embodiment, the downlink channel includes a downlink control channel and/or a downlink data channel.

The network device 1500 in embodiments of the present disclosure can implement corresponding functions of the terminal device in the foregoing method embodiments. For the processes, functions, implementations, and beneficial effects corresponding to each module (submodule, unit, component, etc.) in the network device 1500, reference may be made to corresponding descriptions of the above method embodiments, which will not be repeated herein for brevity. It can be noted that functions described with respect to each module (submodule, unit, component, etc.) in the network device 1500 according to embodiments of the present disclosure may be implemented by different modules (submodules, units, components, etc.), or may also be implemented by the same module (submodule, unit, component, etc.).

A model training device is further provided in embodiments of the present disclosure. The model training device includes a training module.

The training module is configured to train a neural network model using multiple training samples and labels corresponding to the multiple training samples.

A training sample includes a first signal, and the first signal includes a downlink reference signal and/or a downlink channel transmitted by at least two network nodes on identical time-frequency resources.

The training sample further includes at least one of: time-frequency location information of the downlink reference signal and/or the downlink channel; power information of the downlink reference signal and/or the downlink channel; or transmit spatial filter information of the downlink reference signal and/or the downlink channel.

In an embodiment, a label corresponding to the training sample includes the downlink reference signal and/or the downlink channel.

FIG. 16 is a schematic structural diagram of a communication device 1600 according to an embodiment of the present disclosure. The communication device 1600 includes a processor 1610. The processor 1610 is configured to invoke and execute a computer program from a memory, to cause the communication device 1600 to implement the method according to embodiments of the present disclosure.

In one embodiment, the communication device 1600 may further include a memory 1620. The processor 1610 may invoke and execute the computer program from the memory 1620, to cause the communication device 1600 to implement the method according to embodiments of the present disclosure.

The memory 1620 may be a separate device independent from the processor 1610, or may be integrated into the processor 1610.

In one embodiment, the communication device 1600 may further include a transceiver 1630. The processor 1610 is configured to control the transceiver 1630 to communicate with other devices. Specifically, the transceiver is configured to send information or data to other devices, or receive information or data transmitted by other devices.

The transceiver 1630 may include a transmitter and a receiver. The transceiver 1630 may further include one or more antennas.

In one embodiment, the communication device 1600 may be the network device according to embodiments of the present disclosure, and may implement corresponding procedures performed by the network device in each method in embodiments of the present disclosure, which will not be repeated herein for brevity.

In one embodiment, the communication device 1600 may be the terminal device according to embodiments of the present disclosure, and may implement corresponding procedures performed by the terminal device in each method in embodiments of the present disclosure, which will not be repeated herein for brevity.

FIG. 17 is a schematic structural diagram of a chip 1700 according to an embodiment of the present disclosure. The chip 1700 includes a processor 1710. The processor 1710 may invoke and execute a computer program from a memory, to implement the method according to embodiments of the present disclosure.

In one embodiment, the chip 1700 may further include a memory 1720. The processor 1710 may invoke and execute the computer program from the memory 1720, to implement the method performed by the terminal device or the network device according to embodiments of the present disclosure.

The memory 1720 may be a separate device independent from the processor 1710, or may be integrated into the processor 1710.

In one embodiment, the chip 1700 may further include an input interface 1730. The processor 1710 is configured to control the input interface 1730 to communicate with other devices or chips, and specifically, obtain information or data sent by other devices or chips.

In one embodiment, the chip 1700 may further include an output interface 1740. The processor 1710 is configured to control the output interface 1740 to communicate with other devices or chips, and specifically, output information or data to other devices or chips.

In one embodiment, the chip may be applied to the network device according to embodiments of the present disclosure, and may implement corresponding procedures performed by the network device in each method in embodiments of the present disclosure, which will not be repeated herein for brevity.

In one embodiment, the chip may be applied to the terminal device according to embodiments of the present disclosure, and may implement corresponding procedures performed by the terminal device in each method in embodiments of the present disclosure, which will not be repeated herein for brevity.

Chips applied to a network device and a terminal device may be the same chip or different chips.

It may be understood that the chip mentioned in embodiments of the present disclosure may also be referred to as a system-level, a system chip, a chip system, or a systemon-chip chip (SOC) chip.

The processor mentioned above may be a general-purpose processor, a digital signal processor (DSP), a field programmable gate array (FPGA), an application specific integrated circuit (ASIC), or another programmable logic device, a transistor logic device, a discrete hardware component, or the like. The general-purpose processor may be a microprocessor, or may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

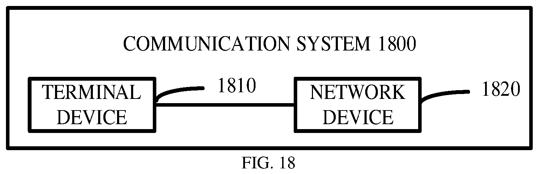

FIG. 18 is a schematic block diagram of a communication system 1800 according to an embodiment of the present disclosure. The communication system 1800 includes a terminal device 1810 and a network device 1820.

The terminal device 1810 is configured to receive a first signal, the first signal including a downlink reference signal and/or a downlink channel transmitted by at least two network nodes on identical time-frequency resources; and obtain the downlink reference signal and/or the downlink channel from the first signal using one or more of the following information: time-frequency location information of the downlink reference signal and/or the downlink channel; power information of the downlink reference signal and/or the downlink channel; or transmit spatial filter information of the downlink reference signal and/or the downlink channel.

The network device 1820 is configured to send to a terminal device one or more of the following information, the one or more of the following information being used by the terminal device to obtain a downlink reference signal and/or a downlink channel from a first signal, the first signal including the downlink reference signal and/or the downlink channel transmitted by at least two network nodes on identical time-frequency resources; time-frequency location information of the downlink reference signal and/or the downlink channel; power information of the downlink reference signal and/or the downlink channel; or transmit spatial filter information of the downlink reference signal and/or the downlink channel.

The terminal device 1810 is configured to realize corresponding functions realized by the terminal device in the above method, and the network device 1820 is configured to realize corresponding functions realized by the network device in the above method. For the sake of simplicity, the above method will not be repeated herein.

All or part of the above embodiments can be implemented through software, hardware, firmware, or any other combination thereof. When implemented by software, all or part of the above embodiments can be implemented in the form of a computer program product. The computer program product includes one or more computer instructions. When the computer program instructions are applied and executed on a computer, all or part of the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usablemedium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It may be understood that in various embodiments of the disclosure, the magnitude of a sequence number of each of the above processes does not mean an execution order, and an execution order of each process can be determined according to a function and an internal logic of the process, which shall not constitute any limitation to an implementation process of embodiments of the disclosure.

It will be evident to those skilled in the art that, for the sake of convenience and simplicity, in terms of the specific working processes of the foregoing systems, apparatuses, and units, reference can be made to the corresponding processes in the above method embodiments, which will not be repeated herein.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method, comprising:
receiving, by a terminal device, a first signal, the first signal comprising a downlink reference signal and/or a downlink channel transmitted by at least two network nodes on identical time-frequency resources;
obtaining, by the terminal device, the downlink reference signal and/or the downlink channel from the first signal using one or more of the following information:
time-frequency location information of the downlink reference signal and/or the downlink channel;
power information of the downlink reference signal and/or the downlink channel; or
transmit spatial filter information of the downlink reference signal and/or the downlink channel.

2. The method of claim 1, wherein obtaining, by the terminal device, the downlink reference signal and/or the downlink channel from the first signal using one or more of the following information comprises:
inputting, by the terminal device, the first signal into a neural network model, and inputting the one or more of the information into the neural network model, wherein the downlink reference signal and/or the downlink channel are output by the neural network model.

3. The method of claim 1 or 2, wherein time-frequency resources of the downlink reference signal and/or the downlink channel transmitted by the at least two network nodes are partially superimposed or fully superimposed.

4. The method of any one of claims 1 to 3, further comprising:
sending, by the terminal device, first information, the first information indicating whether the terminal device supports partial or full superimposition of time-frequency resources of the downlink reference signal and/or the downlink channel transmitted by the at least two network nodes.

5. The method of any one of claims 1 to 4, further comprising:
receiving, by the terminal device, the one or more of the information.

6. The method of claim 5, wherein receiving, by the terminal device, the time-frequency location information of the downlink reference signal and/or the downlink channel comprises:
receiving, by the terminal device, a first configuration or a first indication, the first configuration or first indication being used to configure or indicate the time-frequency location information of the downlink reference signal and/or the downlink channel of different network nodes.

7. The method of claim 6, wherein the first configuration or first indication comprises one or more of: radio resource control (RRC) signaling, media access control-control element (MAC CE) signaling, or downlink control information (DCI).

8. The method of claim 6 or 7, wherein the downlink reference signal comprises a periodic channel state information-reference signal (CSI-RS), and receiving, by the terminal device, the first configuration or the first indication comprises:
receiving, by the terminal device, RRC signaling, the RRC signaling configuring time-frequency resources of the periodic CSI-RS.

9. The method of claim 6 or 7, wherein the downlink reference signal comprises a semi-persistent CSI-RS, and receiving, by the terminal device, the first configuration or the first indication comprises:
receiving, by the terminal device, RRC signaling, the RRC signaling configuring time-frequency resources of a CSI-RS, the time-frequency resources of the CSI-RS configured by the RRC signaling comprising time-frequency resources of the semi-persistent CSI-RS; and
receiving, by the terminal device, MAC CE signaling, the MAC CE signaling activating or de-activating the semi-persistent CSI-RS.

10. The method of claim 6 or 7, wherein the downlink reference signal comprises an aperiodic CSI-RS, and receiving, by the terminal device, the first configuration or the first indication comprises:
receiving, by the terminal device, RRC signaling, the RRC signaling configuring time-frequency resources of a CSI-RS, the time-frequency resources of the CSI-RS configured by the RRC signaling comprising time-frequency resources of the aperiodic CSI-RS; and
receiving, by the terminal device, DCI, the DCI scheduling an aperiodic CSI-RS.

11. The method of claim 6 or 7, wherein the downlink reference signal comprises a demodulation reference signal (DMRS), and receiving, by the terminal device, the first configuration or the first indication comprises:
receiving, by the terminal device, RRC signaling, the RRC signaling configuring time-frequency resources of the DMRS, the time-frequency resources of the DMRS configured by the RRC signaling comprising time-frequency resources of an aperiodic DMRS; and
receiving, by the terminal device, DCI, the DCI scheduling the aperiodic DMRS.

12. The method of any one of claims 5 to 11, wherein the power information of the downlink reference signal and/or the downlink channel comprises one or more of:
a transmit power ratio between the downlink reference signal and/or the downlink channel; or
a path loss of each network node among the at least two network nodes.

13. The method of any one of claims 5 to 11, wherein the power information of the downlink reference signal and/or the downlink channel comprises: a received power ratio between the downlink reference signal and/or the downlink channel.

14. The method of claim 13, wherein the received power ratio between the downlink reference signal and/or the downlink channel is determined according to one or more of:
a transmit power ratio between the downlink reference signal and/or the downlink channel; or
a path loss of each network node among the at least two network nodes.

15. The method of claim 12 or 14, wherein the transmit power ratio between the downlink reference signal and/or the downlink channel comprises one or more of:
a transmit power ratio between various downlink reference signals; or
a transmit power ratio between the downlink reference signal and the downlink channel.

16. The method of any one of claims 5 to 15, wherein receiving, by the terminal device, the power information of the downlink reference signal and/or the downlink channel comprises:
receiving, by the terminal device, a second configuration or a second indication, the second configuration or second indication being used to configure or indicate a transmit power ratio between the downlink reference signal and/or the downlink channel.

17. The method of claim 16, wherein the second configuration or second indication comprises one or more of: RRC signaling, MAC CE signaling, or DCI.

18. The method of claim 16 or 17, wherein receiving, by the terminal device, the second configuration or the second indication comprises:
receiving, by the terminal device, RRC signaling, the RRC signaling configuring a transmit power ratio between the downlink reference signal and/or the downlink channel.

19. The method of claim 16 or 17, wherein receiving, by the terminal device, the second configuration or the second indication comprises:
receiving, by the terminal device, RRC signaling, the RRC signaling configuring a set of transmit power ratios; and
receiving, by the terminal device, MAC CE signaling, the MAC CE signaling activating one transmit power ratio in the set of transmit power ratios.

20. The method of claim 16 or 17, wherein receiving, by the terminal device, the second configuration or the second indication comprises:
receiving, by the terminal device, RRC signaling, the RRC signaling configuring a set of transmit power ratios;
receiving, by the terminal device, MAC CE signaling, the MAC CE signaling activating a subset of the set of transmit power ratios; and
receiving, by the terminal device, DCI, the DCI indicating one transmit power in the subset.

21. The method of claim 16 or 17, wherein receiving, by the terminal device, the second configuration or the second indication comprises:
receiving, by the terminal device, MAC CE signaling, the MAC CE indicating a transmit power ratio between the downlink reference signal and/or the downlink channel.

22. The method of claim 16 or 17, wherein receiving, by the terminal device, the second configuration or the second indication comprises:
receiving, by the terminal device, DCI, the DCI indicating a transmit power ratio between the downlink reference signal and/or the downlink channel.

23. The method of any one of claims 1 to 22, wherein the downlink reference signal and/or the downlink channel transmitted by the at least two network nodes form a superimposed space, and the superimposed space comprises a reference signal layer and/or a data layer; and wherein:
the reference signal layer corresponds to the downlink reference signal; and
the data layer corresponds to the downlink channel.

24. The method of claim 23, wherein downlink reference signals transmitted by different network nodes are multiplexed on an identical reference signal layer.

25. The method of claim 24, wherein a multiplexing manner of the downlink reference signals transmitted by different network nodes includes one or more of: time division multiplexing, frequency division multiplexing, code division multiplexing, or space division multiplexing.

26. The method of claim 23, wherein downlink reference signals transmitted by different network nodes correspond to different reference signal layers.

27. The method of any one of claims 23 to 26, wherein the reference signal layer and the data layer in the superimposed space may be partially superimposed or fully superimposed.

28. The method of any one of claims 1 to 27, wherein the downlink channel comprises a downlink control channel and/or a downlink data channel.

29. A communication method, comprising:
sending, by a network device, to a terminal device one or more of the following information, the one or more of the following information being used by the terminal device to obtain a downlink reference signal and/or a downlink channel from a first signal, the first signal comprising the downlink reference signal and/or the downlink channel transmitted by at least two network nodes on identical time-frequency resources:
time-frequency location information of the downlink reference signal and/or the downlink channel;
power information of the downlink reference signal and/or the downlink channel; or
transmit spatial filter information of the downlink reference signal and/or the downlink channel.

30. The method of claim 29, wherein time-frequency resources of the downlink reference signal and/or the downlink channel transmitted by the at least two network nodes are partially superimposed or fully superimposed.

31. The method of claim 29 or 30, further comprising:
receiving, by the network device, first information sent by the terminal device, the first information indicating whether the terminal device supports partial or full superimposition of time-frequency resources of the downlink reference signal and/or the downlink channel transmitted by the at least two network nodes.

32. The method of any one of claims 29 to 31, wherein sending, by the network device, the time-frequency location information of the downlink reference signal and/or the downlink channel comprises:
sending, by the network device, a first configuration or a first indication to the terminal device, the first configuration or first indication being used to configure or indicate the time-frequency location information of the downlink reference signal and/or the downlink channel of different network nodes.

33. The method of claim 32, wherein the first configuration or first indication comprises one or more of: radio resource control (RRC) signaling, media access control-control element (MAC CE) signaling, or downlink control information (DCI).

34. The method of claim 32 or 33, wherein the downlink reference signal comprises a periodic channel state information-reference signal (CSI-RS), sending, by the network device, the first configuration or the first indication to the terminal device comprises:
sending, by the network device, RRC signaling to the terminal device, the RRC signaling configuring time-frequency resources of the periodic CSI-RS.

35. The method of claim 32 or 33, wherein the downlink reference signal comprises a semi-persistent CSI-RS, sending, by the network device, the first configuration or the first indication to the terminal device comprises:
sending, by the network device, RRC signaling to the terminal device, the RRC signaling configuring time-frequency resources of a CSI-RS, the time-frequency resources of the CSI-RS configured by the RRC signaling comprising time-frequency resources of the semi-persistent CSI-RS; and
sending, by the network device, MAC CE signaling to the terminal device, the MAC CE signaling activating or de-activating the semi-persistent CSI-RS.

36. The method of claim 32 or 33, wherein the downlink reference signal comprises an aperiodic CSI-RS, sending, by the network device, the first configuration or the first indication to the terminal device comprises:
sending, by the network device, an RRC signaling to the terminal device, the RRC signaling configuring time-frequency resources of a CSI-RS, the time-frequency resources of the CSI-RS configured by the RRC signaling comprising time-frequency resources of the aperiodic CSI-RS; and
sending, by the network device, DCI to the end device, the DCI scheduling an aperiodic CSI-RS.

37. The method of claim 32 or 33, wherein the downlink reference signal comprises a demodulation reference signal (DMRS), sending, by the network device, the first configuration or the first indication to the terminal device comprises:
sending, by the network device, RRC signaling to the terminal device, the RRC signaling configuring time-frequency resources of the DMRS, the time-frequency resources of the DMRS configured by the RRC signaling comprising time-frequency resources of an aperiodic DMRS; and
sending, by the network device, DCI to the terminal device, the DCI scheduling the aperiodic DMRS.

38. The method of any one of claims 29 to 37, wherein the power information of the downlink reference signal and/or the downlink channel comprises one or more of:
a transmit power ratio between the downlink reference signal and/or the downlink channel; or
a path loss of each network node among the at least two network nodes.

39. The method of any one of claims 29 to 37, wherein the power information of the downlink reference signal and/or the downlink channel comprises: a received power ratio between the downlink reference signal and/or the downlink channel.

40. The method of claim 39, wherein the received power ratio between the downlink reference signal and/or the downlink channel is determined according to one or more of:
a transmit power ratio between the downlink reference signal and/or the downlink channel; or
a path loss of each network node among the at least two network nodes.

41. The method of claim 38 or 40, wherein the transmit power ratio between the downlink reference signal and/or the downlink channel comprises one or more of:
a transmit power ratio between various downlink reference signals; or
a transmit power ratio between the downlink reference signal and the downlink channel.

42. The method of any one of claims 38 to 41, wherein sending, by the network device, the power information of the downlink reference signal and/or the downlink channel to the terminal device comprises:
sending, by the network device, a second configuration or a second indication to the terminal device, the second configuration or second indication being used to configure or indicate a transmit power ratio between the downlink reference signal and/or the downlink channel.

43. The method of claim 42, wherein the second configuration or second indication comprises one or more of: RRC signaling, MAC CE signaling, or DCI.

44. The method of claim 42 or 43, wherein sending, by the network device, the second configuration or the second indication to the terminal device comprises:
sending, by the network device, RRC signaling to the terminal device, the RRC signaling configuring a transmit power ratio between the downlink reference signal and/or the downlink channel.

45. The method of claim 42 or 43, wherein sending, by the network device, the second configuration or the second indication to the terminal device comprises:
sending, by the network device, RRC signaling to the terminal device, the RRC signaling configuring a set of transmit power ratios; and
sending, by the network device, MAC CE signaling to the terminal device, the MAC CE signaling activating one transmit power ratio in the set of transmit power ratios.

46. The method of claim 42 or 43, wherein sending, by the network device, the second configuration or the second indication to the terminal device comprises:
sending, by the network device, RRC signaling to the terminal device, the RRC signaling configuring a set of transmit power ratios;
sending, by the network device, MAC CE signaling to the terminal device, the MAC CE signaling activating a subset of the set of transmit power ratios; and
sending, by the network device, DCI to the terminal device, the DCI indicating one transmit power in the subset.

47. The method of claim 42 or 43, wherein sending, by the network device, the second configuration or the second indication to the terminal device comprises:
sending, by the network device, MAC CE signaling to the terminal device, the MAC CE indicating a transmit power ratio between the downlink reference signal and/or the downlink channel.

48. The method of claim 42 or 43, wherein sending, by the network device, the second configuration or the second indication to the terminal device comprises:
sending, by the network device, DCI to the terminal device, the DCI indicating a transmit power ratio between the downlink reference signal and/or the downlink channel.

49. The method of any one of claims 29 to 48, wherein the downlink reference signal and/or the downlink channel transmitted by the at least two network nodes form a superimposed space, and the superimposed space comprises a reference signal layer and/or a data layer; and wherein:
the reference signal layer corresponds to the downlink reference signal; and
the data layer corresponds to the downlink channel.

50. The method of claim 49, wherein downlink reference signals transmitted by different network nodes are multiplexed on an identical reference signal layer.

51. The method of claim 50, wherein a multiplexing manner of the downlink reference signals transmitted by different network nodes includes one or more of: time division multiplexing, frequency division multiplexing, code division multiplexing, or space division multiplexing.

52. The method of claim 49, wherein downlink reference signals transmitted by different network nodes correspond to different reference signal layers.

53. The method of any one of claims 49 to 52, wherein the reference signal layer and the data layer in the superimposed space may be partially superimposed or fully superimposed.

54. The method of any one of claims 29 to 53, wherein the downlink channel comprises a downlink control channel and/or a downlink data channel.

55. A model training method, comprising:
training a neural network model using a plurality of training samples and labels corresponding to the plurality of training samples;
wherein a training sample comprises a first signal, and the first signal comprises a downlink reference signal and/or a downlink channel transmitted by at least two network nodes on identical time-frequency resources; and
the training sample further comprises at least one of: time-frequency location information of the downlink reference signal and/or the downlink channel; power information of the downlink reference signal and/or the downlink channel; or transmit spatial filter information of the downlink reference signal and/or the downlink channel.

56. The method of claim 55, wherein a label corresponding to the training sample comprises the downlink reference signal and/or the downlink channel.

57. A terminal device, comprising:
a first transceiver module configured to receive a first signal, the first signal comprising a downlink reference signal and/or a downlink channel transmitted by at least two network nodes on identical time-frequency resources; and
a first processing module configured to obtain the downlink reference signal and/or the downlink channel from the first signal using one or more of the following information:
time-frequency location information of the downlink reference signal and/or the downlink channel;
power information of the downlink reference signal and/or the downlink channel; or
transmit spatial filter information of the downlink reference signal and/or the downlink channel.

58. A network device, comprising:
a second transceiver module configured to send to a terminal device one or more of the following information, the one or more of the following information being used by the terminal device to obtain a downlink reference signal and/or a downlink channel from a first signal, the first signal comprising the downlink reference signal and/or the downlink channel transmitted by at least two network nodes on identical time-frequency resources:
time-frequency location information of the downlink reference signal and/or the downlink channel;
power information of the downlink reference signal and/or the downlink channel; or
transmit spatial filter information of the downlink reference signal and/or the downlink channel.

59. A model training device, comprising:
a training module configured to train a neural network model using a plurality of training samples and labels corresponding to the plurality of training samples;
wherein a training sample comprises a first signal, and the first signal comprises a downlink reference signal and/or a downlink channel transmitted by at least two network nodes on identical time-frequency resources; and
the training sample further comprises at least one of: time-frequency location information of the downlink reference signal and/or the downlink channel; power information of the downlink reference signal and/or the downlink channel; or transmit spatial filter information of the downlink reference signal and/or the downlink channel.

60. A terminal device, comprising:
a transceiver, a processor, and a memory, wherein the memory is configured to store a computer program, the transceiver is configured to communicate with other devices, and the processor is configured to invoke and execute the computer program stored in the memory, to cause the terminal device to perform the method of any one of claims 1 to 28.

61. A network device, comprising:
a transceiver, a processor, and a memory, wherein the memory is configured to store a computer program, the transceiver is configured to communicate with other devices, and the processor is configured to invoke and execute the computer program stored in the memory, to cause the network device to perform the method of any one of claims 29 to 54.

62. A chip, comprising:
a processor configured to invoke and execute a computer program stored in a memory, to cause a device equipped with the chip to perform the method of any one of claims 1 to 28 or the method of any one of claims 29 to 54.

63. A computer-readable storage medium configured to store a computer program which, when executed by a device, causes the device to perform the method of any one of claims 1 to 28 or the method of any one of claims 29 to 54.

64. A computer program product comprising computer program instructions which cause a computer to perform the method of any one of claims 1 to 28 or the method of any one of claims 29 to 54.

65. A computer program causing a computer to perform the method of any one of claims 1 to 28 or the method of any one of claims 29 to 54.

66. A communication system, comprising:
a terminal device configured to perform the method of any one of claims 1 to 28; and
a network device configured to perform the method of any one of claims 29 to 54.
